# EUROPÄISCHE PATENTSCHRIFT

(11) **EP 0 237 468 B1**
(45) Veröffentlichungstag und Bekanntmachung des Hinweises auf die Patenterteilung: **20.01.1993**
(21) Anmeldenummer: 87810009.8
(22) Anmeldetag: 07.01.1987
(51) Int. Cl.: C08F 299/02, C08G 73/12, C09D 4/00

(54) **Lagerstabile heisshärtbare Mischungen und deren Verwendung**
Storable thermo-curable compositions and their use
Compositions thermodurcissables stockables et leur utilisation

(30) Priorität: 13.01.1986 CH 105/86
(43) Veröffentlichungstag der Anmeldung: 16.09.1987
(73) Patentinhaber: CIBA-GEIGY AG, 4002 Basel (CH)
(72) Erfinder: Schmid, Rolf, Dr., CH-3150 Schwarzenburg (CH); Stauffer, Werner, CH-1700 Fribourg (CH); Zahir, Sheik Abdul-Cader, Dr., CH-4104 Oberwil (CH)

(56) Entgegenhaltungen:
- EP-A- 0 244 070
- FR-A- 2 316 267
- FR-A- 2 355 047

## Beschreibung

Die vorliegende Erfindung betrifft lagerstabile heisshärtbare (vernetzbare) Mischungen und deren Verwendung, besonders als Laminier- oder Elektroharze, als Klebstoffe oder Klebefilme für Hochtemperaturanwendungen oder zur Herstellung von Beschichtungen.

Aus der US-PS 4.100.140 sind lagerstabile heisshärtbare Mischungen aus Polyimiden mit C=C-Doppelbindungen, besonders Bismaleinimiden, Alkenylphenolen und/oder Alkenylphenolethern und gegebenenfalls Polymerisationskatalysatoren bekannt, die vor allem als Giessharze Anwendung finden. Die US-PS 4.127.615 beschreibt weitere lagerstabile heisshärtbare Mischungen, die neben Polyimiden mit C=C-Doppelbindungen, Alkenylphenolen und/oder Alkenylphenolethern noch ein Epoxidharz und gegebenenfalls einen Härtungsbeschleuniger enthalten. Dabei kann das Epoxidharz auch mit Allylgruppen substituiert sein. Diese Gemische werden ebenfalls bevorzugt als Giessharze eingesetzt.

Gegenstand der Erfindung sind neue lagerstabile heisshärtbare Mischungen, enthaltend
A) ein Polyimid, welches im Molekül mindestens zwei Reste der Formel I 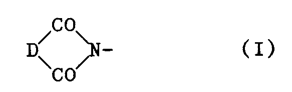 enthält, worin D einen Rest der Formel -CR=CR'-, 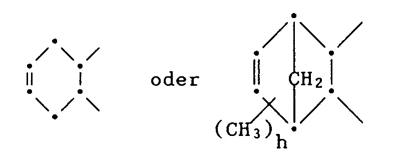 bedeutet,
   worin h Null oder 1 ist und R und R' unabhängig voneinander ein Wasserstoff- oder Chloratom oder eine Methylgruppe bedeuten,
B) ein Alkenylphenol,
C) ein epoxidgruppenfreies Addukt aus einem Epoxidharz und überschüssigem Alkenylphenol und/oder
D) ein in organischen Lösungsmitteln lösliches Polyimid.

Besonders gut geeignet als Polyimide (A) sind Maleinimide der Formel II 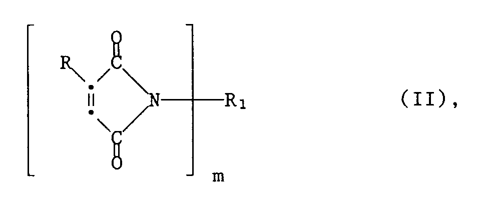
worin m 2 oder 3, R ein Wasserstoffatom oder eine Methylgruppe und R₁ einen m-wertigen organischen Rest mit 2-30 C-Atomen bedeuten.

R stellt insbesondere ein Wasserstoffatom dar.

Als organische Reste R₁ kommen bei m = 2 z.B. in Betracht: -CₚH₂ₚ- mit p = 2-20, besonders -(CH₂)ₚ- mit P = 2-12, -CH₂CH₂SCH₂CH₂-, Arylen mit 6-10 C-Atomen, Xylylen, Cyclopentylen, Cyclohexylen, 1,4-Bis(methylen)cyclohexylen, der Rest des Bicyclohexylmethans oder Reste der Formeln III oder IV 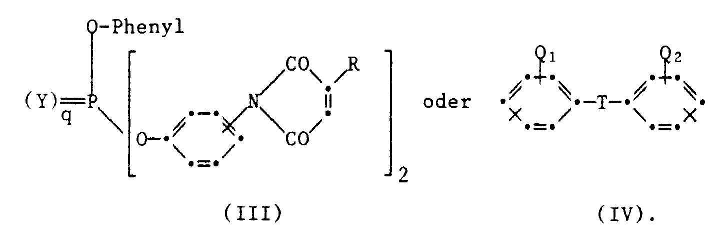
Stellt m die Zahl 3 dar, so bedeutet R₁ z.B. einen Rest der Formel V 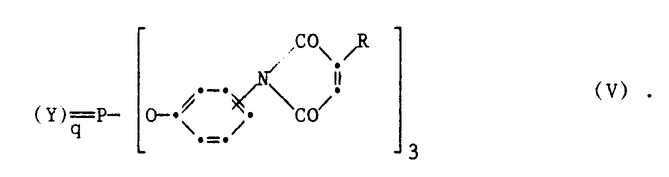
In den obigen Formeln III bis V bedeutet T die direkte Bindung, Methylen, 2,2-Propyliden, -CO-, -O-, -S-, -SO₂, -P=O(Q₃), -NQ₃-(Q₃ = C₁-C₄-Alkyl), -N=H, -CONH-, -COO-, -NQ₃-CO-A-CO-NQ₃- -O-CO-A-CO-O-, 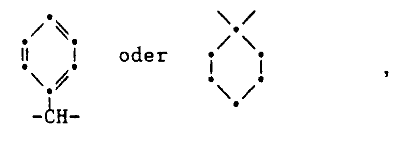
q ist 0 oder 1,
Y stellt O oder S dar,
Q₁ und Q₂ bedeuten unabhängig voneinander ein Halogenatom, besonders Chlor oder Brom, Methyl oder Ethyl und insbesondere ein Wasserstoffatom,
A ist die direkte Bindung, -CₜH₂ₜ- mit t = 1-12, Arylen mit 6-10 C-Atomen, Xylylen, Cyclopentylen oder Cyclohexylen und R hat die oben angegebene Bedeutung.

Als spezielle Beispiele für Maleinimide der Formel II, welche in den erfindungsgemässen Mischungen enthalten sein können, seien genannt:
N,N'-Ethylen-bis-maleinimid,
N,N'-Hexamethylen-bis-maleinimid,
N,N'-m-Phenylen-bis-maleinimid,
N,N'-4,4-Diphenylmethan-bis-maleinimid,
N,N'-4,4'-3,3'-Dichlor-diphenylmethan-bismaleinimid,
N,N'-4,4'-Diphenylether-bis-maleinimid,
N,N'-4,4'-Diphenylsulfon-bis-maleinmid,
N,N'-m-Xylylen-bis-maleinimid,
N,N'-p-Xylylen-bis-maleinimid,
N,N-4,4'-2,2-Diphenylpropan-bis-maleinimid,
das N,N'-Bis-maleinimid des 4,4'-Diamino-triphenylphosphats,
das N,N'-Bis-maleinimid des 4,4'-Diamino-triphenylthiophosphats,
das N,N',N''-Trismaleinimid des Tris-(4-aminophenyl)-phosphats,
das N,N',N''-Trismaleinimid des Tris-(4-aminophenyl)-phosphats und
das N,N',N''-Trismaleinimid des Tris-(4-aminophenyl)-thiophosphats.

Als Verbindungen der Formel II sind solche bevorzugt, worin m die Zahl 2, R ein Wasserstoffatom und R₁ -(CH₂)ₚ- mit p = 2-12, m- oder p-Phenylen, m- oder p-Xylylen, 1,4-Cyclohexylen, 1,4-Bis(methylen)-cyclohexylen, den Rest des 4,4'-Bicyclohexylmethans und vor allem einen in 4,4'-Stellung gebundenen Rest der Formel IV bedeuten, worin Q₁ und Q₂ je ein Wasserstoffatom und T -O-, -CH₂- oder -SO₂- darstellen. Ganz besonders bevorzugt ist das N,N',4,4'-Diphenylmethan-bismaleinimid.

Erfindungsgemäss können auch Gemische verschiedener Polyimide mit Gruppen der Formel I verwendet werden.

Als Alkenylphenole werden erfindungsgemäss bevorzugt Allyl- oder Methallylphenole eingesetzt. Es können sowohl einkernige als auch mehrkernige, vor allem zweikernige Alkenylphenole verwendet werden. Dabei enthält bevorzugt mindestens ein Kern sowohl eine Alkenylgruppe als auch eine phenolische OH-Gruppe.

Alkenylphenole werden bekanntlich durch thermische Umlagerung (Claisen) der Alkenylether von Phenolen, z.B. des Phenol-Allylethers, hergestellt. Zu diesen Alkenylethern gelangt man ebenfalls nach bekannten Verfahren durch Umsetzung von Phenolen und z.B. Allylchlorid in Gegenwart von Alkalimetallhydroxid und Lösungsmitteln.

Eine Klasse bevorzugter Komponenten B) sind alkenylsubstituierte Phenole und Polyole. Als Beispiele seien genannt:
Verbindungen der Formel VI 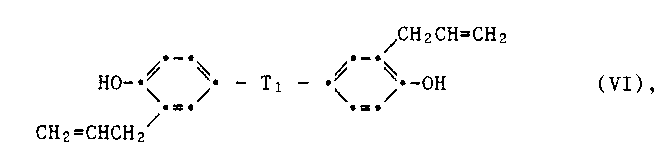
worin T₁ die direkte Bindung, Methylen, 2,2-Propyliden, -O-, -S-, -SO- oder -SO₂- bedeutet. Beispiele solcher Verbindungen sind: o,o'-Diallyl-Bisphenol A, Bis(4-hydroxy-3-allyl)biphenyl, Bis(4-hydroxy-3-allylphenyl)methan und 2,2-Bis(4-hydroxy-3-allylphenyl)propan.

Propenylsubstituierte Phenole der Formel VII 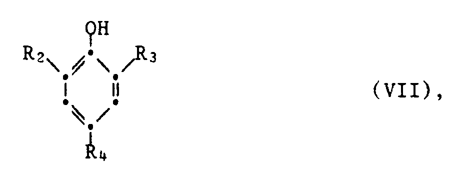
worin R₂, R₃ und R₄ unabhängig voneinander ein Wasserstoffatom, eine Allyl- oder Propenylgruppe bedeuten, wobei mindestens eines von R₂ bis R₄ für die Propenylgruppe steht.

Verbindungen der Formel VIII 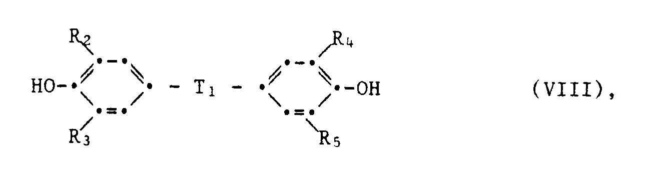
worin R₂, R₃, R₄ und R₅ unabhängig voneinander ein Wasserstoffatom, eine Allyl- oder Propenylgruppe bedeuten, wobei mindestens eines von R₂ bis R₅ für die Propenylgruppe steht und T₁ die oben unter Formel VI angegebene Bedeutung hat.

Verbindungen der Formel IX 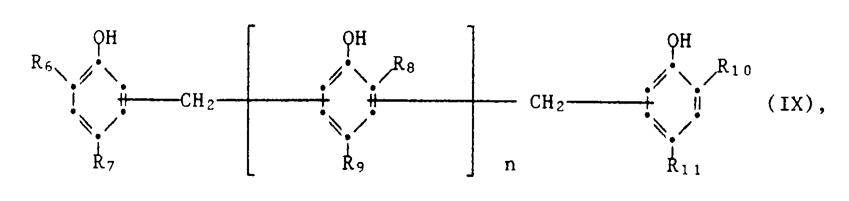
worin R₆, R₇, R₈, R₉, R₁₀ und R₁₁ unabhängig voneinander ein Wasserstoffatom, Alkyl mit 1-4 C-Atomen, Allyl oder Propenyl bedeuten, wobei mindestens eines von R₆ bis R₁₁ für die Propenylgruppe steht und n einen Wert von 0 bis 10 darstellt. Bevorzugt sind Verbindungen der Formel VIII, worin R₂ und R₄ je eine Propenylgruppe und R₃ und R₅ je ein Wasserstoffatom bedeuten und T₁ für Methylen, 2,2-Propyliden oder -O- steht.

Es können auch Isomerengemische aus propenyl- und allyl-substituierten ein- oder mehrwertigen Phenolen eingesetzt werden. Von den Isomerengemischen werden bevorzugt Mischungen aus propenyl- und allylsubstituierten Phenolen der Formel VIII eingesetzt, insbesondere solche, die durch partielle Isomerisierung von allylsubstituierten Phenolen der Formel VIIIa 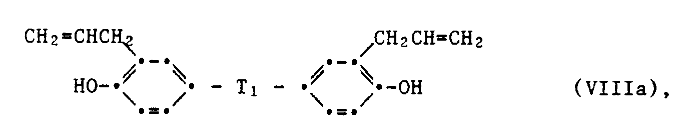
worin T für Methylen, 2,2-Propyliden oder -O- steht, erhalten werden. Derartige alkenylsubstituierte Phenole und Polyole sind z.B. in den US-PS 4.100.140 und 4.371.719 beschrieben.

Besonders bevorzugt als Komponenten B) sind Verbindungen der Formel VI, worin T₁ 2,2-Propyliden und vor allem Methylen bedeutet.

Zur Herstellung der Addukte C) können an sich beliebige Epoxidharze verwendet werden. Es kommen vor allem Epoxidharze mit durchschnittlich mehr als einer an ein Heteroatom, z.B. an ein S- und vorzugsweise an ein O- oder N-Atom, gebundenen Gruppe der Formel X 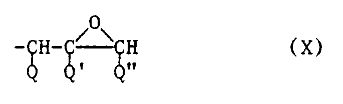
in Betracht, wobei Q und Q'' je ein Wasserstoffatom und Q' ein Wasserstoffatom oder eine Methylgruppe bedeuten oder Q und Q'' zusammen -CH₂CH₂- oder -CH₂CH₂CH₂- und Q' ein Wasserstoffatom bedeuten.

Als Beispiele solcher Harze seien Polyglycidyl- und Poly(β-methylglycidyl)ester genannt, die sich von aliphatischen, cycloaliphatischen oder aromatischen Polycarbonsäuren ableiten. Beispiele geeigneter Polycarbonsäuren sind Bernsteinsäure, Glutarsäure, Adipinsäure, Pimelinsäure, Korksäure, Azelainsäure, Sebacinsäure, dimerisierte oder trimerisierte Linolsäure, Tetrahydrophthalsäure, 4-Methyltetrahydrophthalsäure, Hexahydrophthalsäure, 4-Methylhexahydrophthalsäure, Phthalsäure, Iso- und Terephthalsäure.

Weitere Beispiele sind Polyglycidyl- und Poly(ß-methylglycidyl)ether, die durch Umsetzung einer mindestens zwei alkoholische und/oder phenolische Hydroxylgruppen pro Molekül enthaltenden Verbindung mit Epichlorhydrin oder mit Allylchlorid und anschliessende Epoxidierung mit Persäuren erhalten werden.

Geeignete Polyole sind z.B. Ethylenglykol, Diethylenglykol, Poly(oxyethylen)glykole, Propan-1,2-diol, Poly(oxypropylen)glykole, Propan-1,3-diol, Butan-1,4-diol, Poly(oxytetramethylen)glykole, Pentan-1,5-diol, Hexan-2,4,6-triol, Glycerin, 1,1,1-Trimethylolpropan, Pentaerythrit und Sorbit; 1,3- und 1,4-Cyclohexandiol, Bis-(4-hydroxycyclohexyl)methan, 2,2-Bis-(4-hydroxycyclohexyl)propan und 1,1-Bis(hydroxymethyl)cyclohex-3-en; N,N-Bis(2-hydroxyethyl)anilin und 4,4'-Bis(2-hydroxyethylamino)diphenylmethan; Resorcin, Hydrochinon, Bis-(4-hydroxyphenyl)-methan (Bisphenol F), 2,2-Bis(4-hydroxyphenyl)propan (Bisphenol A), 2,2-Bis(4-hydroxy-3,5-dibromphenyl)propan (Tetrabrombisphenol A), 1,1,2,2-Tetrakis(4-hydroxyphenyl)ethan, 4,4'-Dihydroxybiphenyl, Bis-(4-hydroxyphenyl)sulfon sowie Novolake aus Formaldehyd oder Acetaldehyd und Phenol, Chlorphenol oder Alkylphenolen mit bis zu 9 C-Atomen im Alkyl, besonders Kresol- und Phenol-Novolake.

Als Poly(N-glycidyl)-Verbindungen kommen durch Dehydrochlorierung von Umsetzungsprodukten aus Epichlorhydrin und Aminen mit mindestens zwei Aminwasserstoffatomen erhaltene Produkte in Betracht. Geeignete Amine sind z.B. Anilin, n-Butylamin, Bis-(4-aminophenyl)methan, 1,3- und 1,4-Xylylendiamin, 1,3- und 1,4-Bis(aminomethyl)cyclohexan und Bis(4-methylaminophenyl)methan. Triglycidylisocyanurat, N,N'-Diglycidylderivate von cyclischen Alkylenharnstoffen, wie Ethylenharnstoff und 1,3-Propylenharnstoff, oder Hydantoinen, wie 5,5-Dimethylhydantoin, sind weitere geeignete derartige Verbindungen.

Poly(S-glycidyl)-Verbindungen sind z.B. die Di-S-Glycidylderivate von Dithiolen, wie Ethan-1,2-dithiol und Bis-(4-mercaptomethylphenyl)ether.

Beispiele für Epoxidharze mit einer oder mehreren Gruppen der Formel X, in welcher Q und Q'' zusammen eine Gruppe -CH₂CH₂- oder -CH₂CH₂CH₂- bedeuten, sind Bis(2,3-epoxycyclopentyl)ether, 2,3-Epoxycyclopentylglycidylether, 1,2-Bis(2,3-epoxycyclopentyloxy)ethan, 3,4-Epoxy-6-methylcyclohexylmethyl-3',4'-epoxy-6'-methylcyclohexancarboxylat und 2-(3,4-Epoxy)cyclohexyl-5,5-spiro(3',4'-epoxy)-cyclohexan-dioxan.

Ebenfalls einsetzbar sind Epoxidharze, in welchen die Epoxidgruppen an Heteroatome verschiedener Art gebunden sind, oder in denen einige oder sämtliche Epoxidgruppen mittelständig sind, wie beispielsweise das N,N,O-Triglycidylderivat des 4-Aminophenols, N-Glycidyl-N'(2-glycidyloxypropyl)-5,5-dimethylhydantoin, Vinylcyclohexendioxid, Limonendioxid und Dicyclopentadiendioxid.

Besonders bevorzugt setzt man für die Adduktherstellung gegebenenfalls vorverlängerte Diglycidylether von zweiwertigen Phenolen, vor allem 2,2-Bis(4-hydroxyphenyl)propan, 2,2-Bis(3,5-dibrom-4-hydroxyphenyl)propan, Bis(4-hydroxyphenyl)methan, Bis(4-hydroxycyclohexyl)methan oder 2,2-Bis(4-hydroxycyclohexyl)propan, Polyglycidylether von Novolaken oder tetraglycidyliertes 4,4'-Diaminodiphenylmethan und Alkenylphenole der Formel VI oder Alkenylether von Phenolen, wie der Diallylether des Bisphenol A, ein. Ganz besonders bevorzugt sind Addukte aus gegebenenfalls vorverlängerten Diglycidylethern von Bisphenol A oder Tetrabrom-Bisphenol A und besonders Bisphenol F und Alkenylphenolen der Formel VI, worin T₁ 2,2-Propyliden und vor allem Methylen darstellt.

Für die Addukt-Herstellung werden die Alkenylphenole oder die Alkenylether von Phenolen definitionsgemäss im Ueberschuss eingesetzt, so dass alle Epoxidgruppen umgesetzt werden. Je nach beabsichtigter Verwendung werden grössere oder kleinere Ueberschüsse an Alkenylphenolen und/oder Alkenylethern von Phenolen verwendet, wobei Gemische mit höheren oder niedrigeren Anteilen an nicht reagierter Komponente B) erhalten werden. Das Verhältnis der Epoxidäquivalente zu phenolischen OH-Gruppen liegt zweckmässig zwischen etwa 1:2 und 1:6, besonders 1:3 bis 1:4.

Die Herstellung der Addukte erfolgt auf an sich bekannte Weise in der Schmelze oder einem inerten organischen Lösungsmittel und gegebenenfalls in Gegenwart eines Katalysators. Als inerte Lösungsmittel eignen sich beispielsweise gegebenenfalls chlorierte aromatische Kohlenwasserstoffe, wie Benzol, Toluol und Chlorbenzol; Ketone, wie Aceton, Methylethylketon und Cyclohexanon; höhersiedende Alkohole, wie Butanole, Isopropanol und 2-Ethylhexanol. Die Reaktionstemperaturen liegen im allgemeinen zwischen 100 und 250°C, besonders 120 und 180°C. Bevorzugt ist die Addukt-Bildung in der Schmelze. Als Katalysatoren kommen an sich beliebige, für die Adduktbildung geeignete Verbindungen in Betracht, vor allem Alkalimetallhydroxide, tertiäre Amine, wie Benzyldimethylamin, Tris(dimethylaminomethyl)phenol, Trimethylamin, Triethylamin, Octyldimethylamin, Hexamethylentetramin, sowie gegebenenfalls substituierte Imidazole, wie Imidazol, Benzimidazol, 1-Methylimidazol, 3-Methylimidazol, 2-Ethyl-4-methylimidazol, 2-Phenylimidazol, 2-Phenyl-4-methylimidazol und 1-(2,6-Dichlorbenzoyl)-2-phenylimidazol. Tertiäre Amine, besonders Benzyldimethylamin, und Imidazole, besonders 2-Phenylimidazol, 3-Methylimidazol und 2-Ethyl-4-methylimidazol, sind als Katalysatoren bevorzugt.

Bei Verwendung von Alkenylethern von Phenolen und Epoxidharzen findet vor der Addukt-Bildung eine in-situ-Claisen-Umsetzung zu den entsprechenden Alkenylphenolen statt. Diese Addukt-Herstellung ist besonders vorteilhaft, weil dabei auf eine Reaktionsstufe (Herstellung der Ausgangs-Alkenylphenole aus Alkenylethern von Phenolen) verzichtet werden kann und somit auch kein lästiger Alkenylphenol-Geruch auftritt. Die Reaktion ist zudem weniger exothermisch.

Bei den Komponenten D) kann es sich um Homo- oder Copolyimide handeln. Es können an sich beliebige in organischen Lösungsmitteln lösliche Homo- oder Copolyimide eingesetzt werden. Bei den Copolyimiden kann es sich um statistische Polyimide oder Block-Copolyimide handeln. Besonders geeignet sind z.B.
1. Polyimide mit Phenylindan-Einheiten, wie sie in der US-PS 3.856.752 und der europäischen Patentveröffentlichung 0 092 524 A2 beschrieben sind und die im wesentlichen aus wiederkehrenden Strukturelementen der Formel XI 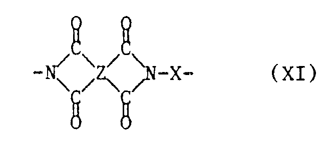 bestehen, worin die vier Carbonylgruppen an verschiedne C-Atome gebunden sind und je zwei Carbonylgruppen in ortho- oder peri-Stellung zueinander stehen,
   Z einen vierwertigen Rest mit mindestens einem aromatischen Ring und X einen zweiwertigen aromatischen, aliphatischen, alkylaromatischen, cycloaliphatischen oder heterocyclischen Rest oder einen Rest mit O-, S-, N-, Si- oder P-haltigen Brückengliedern darstellen, mit der Massgabe, dass
   1) aus der Gesamtzahl der wiederkehrenden Polyimid-Einheiten
      A) in 0 bis 100 Mol.% solcher Einheiten Z ein Phenylindanrest der Strukturformel XII 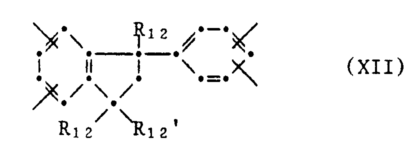 ist, worin R₁₂ Wasserstoff oder einen Alkylrest mit 1 bis 5 Kohlenstoffatomen und R₁₂' einen Alkylrest mit 1 bis 5 Kohlenstoffatomen bedeuten, und
      B) in 0 bis 100 Mol.% solcher Einheiten X ein Phenylindanrest der Strukturformel XIII 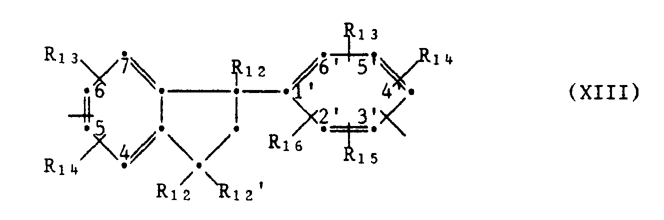 ist, worin R₁₂ Wasserstoff oder einen Alkylrest mit 1 bis 5 Kohlenstoffatomen und R₁₂' einen Alkylrest mit 1 bis 5 Kohlenstoffatomen darstellen und R₁₃, R₁₄, R₁₅ und R₁₆ unabhängig voneinander Wasserstoff, Halogen, Alkoxy oder einen Alkylrest mit 1 bis 4 Kohlenstoffatomen bedeuten und
   2) aus der Gesamtzahl der Reste Z und X mindestens 10 Mol.%, bezogen auf die Einzelkomponenten, Phenylindanreste sind.

   Der Polymerisationsgrad (Zahl der wiederkehrenden Struktureinheiten) beträgt bevorzugt mindestens 20 und kann 1000 und mehr betragen. Besonders bevorzugt ist der Polymerisationsgrad 50 bis 500 und besonders 100 bis 300.
   R₁₂ und R₁₂' können in ihrer Bedeutung als Alkyl Methyl, Ethyl, Propyl, iso-Propyl, Butyl und Pentyl sein. Besonders bevorzugt sind R₁₂ Wasserstoff oder Methyl und R₁₂' Methyl.
   R₁₃, R₁₄, R₁₅ und R₁₆ sind in ihrer Bedeutung als Halogen bevorzugt Chlor oder Brom. Alkoxyreste R₁₃, R₁₄, R₁₅ und R₁₆ sind z.B. Butoxy, Propoxy, Ethoxy und besonders Methoxy, Alkylreste R₁₃, R₁₄, R₁₅ und R₁₆ sind z.B. Butyl, tertiär-Butyl, Propyl, iso-Propyl, Ethyl und besonders Methyl. Besonders bevorzugt sind R₁₃, R₁₄, R₁₅ und R₁₆ Wasserstoff, Methyl oder Chlor.
   Die Phenylindandiamin-Komponente des löslichen Polyimids kann aus jeder Kombination der isomeren oder substituierten isomeren Diaminoreste, die durch die vorstehende Formel XIII dargestellt werden, bestehen. Z.B. kann die Phenylindandiamin-Komponente 0 bis 100 Mol.% 5-Amino-1-(4'-aminophenyl)-1,3,3-trimethylindanreste in Kombination mit 100 bis 0 Mol.% 6-Amino-1-(4'aminophenyl)-1,3,3-trimethylindanresten umfassen. Weiterhin kann jedes oder können beide dieser Isomeren substituiert sein. Beispiele für solche substituierten Diamino-Isomeren sind 5-Amino-6-methyl-1-(3'amino-4'-methyl-phenyl)-1,3,3-trimethylindan, 5-Amino-1-(4'-amino-Ar',Ar'-dichlorphenyl)-Ar,Ar-dichlor-1,3,3-trimethylindan, 6-Amino-1-(4'-amino-Ar',Ar'-dichlorphenyl)-Ar,Ar-dichlor-1,3,3-trimethylindan, 4-Amino-6-methyl-1-(3'-amino-4'-methylphenyl)-1,3,3-trimethylindan und Ar-amino-1-(Ar'-amino-2',4'-dimethylphenyl)-1,3,3,4,6-pentamethylindan. Ar und Ar' in den vorstehenden Formeln zeigen die unbestimmte Lage der angegebenen Substituenten in den Phenylringen an. Die Aminogruppen befinden sich bevorzugt in der Stellung 7, besonders 5 und 6, und den Stellungen 3' und besonders 4'.
   Beispiele für Phenylindandianhydrid-Komponenten mit einem Rest der Formel XII sind: 1-(3',4'-Dicarboxyphenyl)-1,3,3-trimethylindan-5,6-dicarbonsäuredianhydrid, 1-(3',4'-Dicarboxyphenyl)-1,3,3-trimethylindan-6,7-dicarbonsäuredianhydrid, 1-(3',4'-Dicarboxyphenyl)-3-methylindan-5,6-dicarbonsäuredianhydrid und 1-(3',4'-Dicarboxyphenyl)-3-methylindan-6,7-dicarbonsäuredianhydrid.
   Z in Formel XIkann als Nichtphenylindanrest aus den folgenden Gruppen ausgewählt sein: aromatischen, aliphatischen, cycloaliphatischen, heterocyclischen Gruppen, Kombinationen von aromatischen und aliphatischen Gruppen. Die Gruppen können auch substituiert sein. Die Gruppen Z können durch die folgenden Strukturen gekennzeichnet sein: 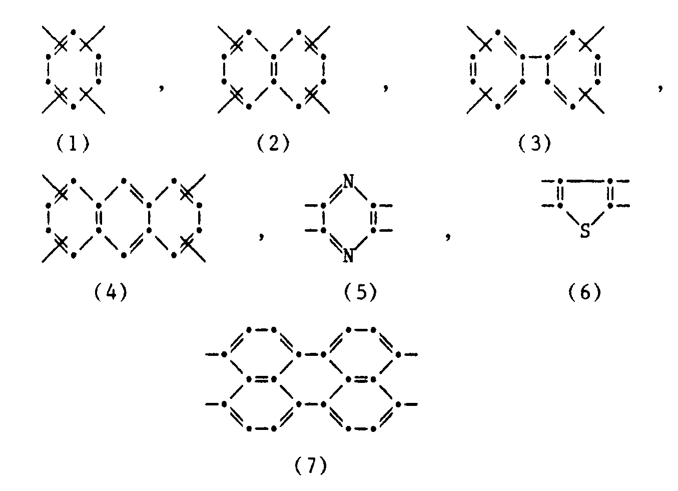 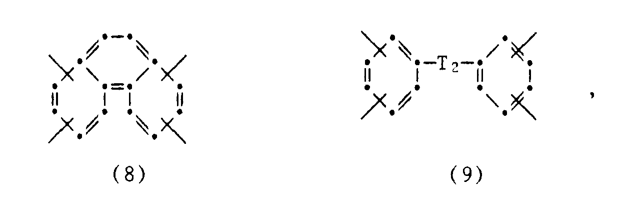 worin T₂ ausgewählt wird aus der Gruppe, bestehend aus
   -O-, -S-, -SO₂-, 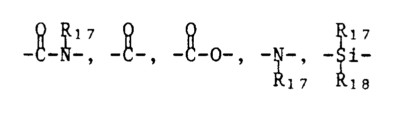 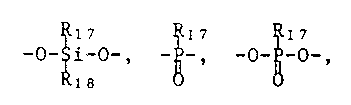 -N=N-, 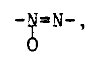 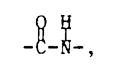 -CH₂-, -CH₂CH₂-, 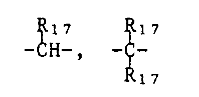 und Phenylen,
   wobei R₁₇ und R₁₈ Alkyl mit bevorzugt 1 bis 6 C-Atomen oder Aryl, besonders Phenyl, bedeuten.
   Besonders bevorzugt ist Z ein Rest der Formel XII, der Rest des Pyromellitsäuredianhydrids, ein Rest der Formel XIV 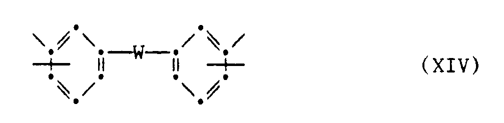 oder ein Gemisch dieser Reste, worin W die direkte Bindung, -CH₂-, -O-, -SO₂- oder -CO- ist.
   Die vorstehend definierte Gruppe X kann z.B. ausgewählt werden unter Alkylengruppen mit 2 bis 12 Kohlenstoffatomen, Cycloalkylengruppen mit 4 bis 6 Ringkohlenstoffatomen; einer Xylylengruppe, Arylengruppen ausgewählt aus ortho-, meta- oder para-Phenylen, Tolylen, Biphenylen, Naphthylen oder Anthrylen; einer substituierten Arylengruppe der Formel XV 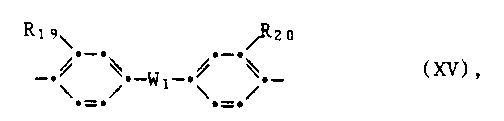 worin W₁ eine kovalente Bindung, -CO-, 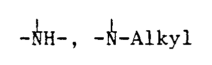 mit 1-5 C-Atomen, -O-, -S-, -SS-, 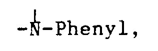 -SO₂-, lineares oder verzweigtes Alkylen mit 1-3 C-Atomen, Alkyliden mit 2-12 C-Atomen, Cycloalkyliden mit 5 oder 6 Ringkohlenstoffatomen, Arylen mit 6-10 C-Atomen, besonders Phenylen, oder eine Gruppe 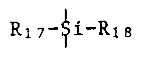 bedeutet, R₁₉ und R₂₀ unabhängig voneinander Wasserstoff, Halogen, besonders Chlor oder Brom, Alkyl mit 1-5 C-Atomen, besonders Methyl, Alkoxy mit 1-5 C-Atomen, besonders Methoxy, oder Aryl mit 6-10 C-Atomen, besonders Phenyl, bedeuten, und R₁₇ und R₁₈ die oben angegebene Bedeutung haben.
   X kann ferner eine Gruppe der Formel XVI 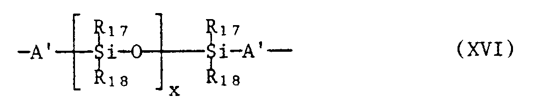 darstellen, worin R₁₇ und R₁₈ die zuvor angegebene Bedeutung haben und A' ein zweiwertiger Kohlenwasserstoffrest ist, z.B. Alkylen mit 1-12, vorzugsweise 1-6 C-Atomen, Cycloalkylen mit bevorzugt 5 oder 6 Ringkohlenstoffatomen oder Phenylen. x ist bevorzugt eine Zahl von 1-1000, besonders 1-100 und vor allem 1-10. Diamine mit solchen Gruppen X sind in der US-PS 4.030.948 beschrieben.
   Bevorzugt stellt X eine Gruppe der Formel XV und vor allem eine Gruppe der Formel XVa oder XVb 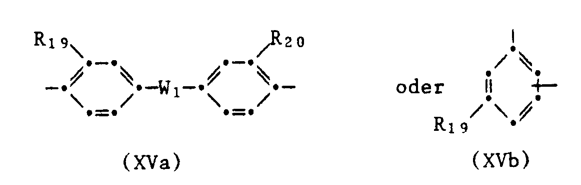 dar, worin W₁ eine kovalente Bindung, Methylen, Ethyliden, 2,2-Propyliden, Cyclohexyliden, -S-, -O- oder -SO₂- darstellt und R₁₉ und R₂₀ unabhängig voneinander Wasserstoff, Halogen oder Alkyl oder Alkoxy mit je 1-5 C-Atomen, insbesondere Wasserstoff oder Methyl, bedeuten.
   Eine bevorzugte Untergruppe an löslichen Polyimiden sind solche, worin in den Strukturelementen der Formel XI 0 bis 100 Mol.% der Reste Z der Formel 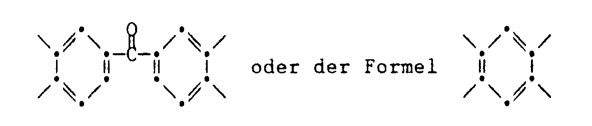 entsprechen, während 100 bis 0 Mol.% der Reste Z eine Mischung aus Resten der Formeln 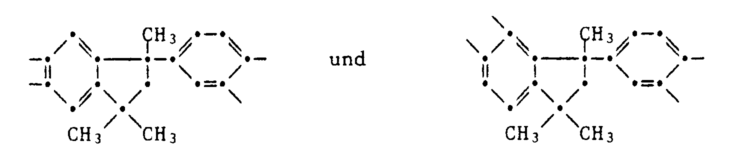 bedeuten, und 100 bis 10 Mol.% der Reste X solche der Formel XIII sind, worin R₁₂, R₁₃, R₁₄, R₁₅ und R₁₆ unabhängig voneinander Wasserstoff oder Methyl und R₁₂' Methyl bedeuten, während 0 bis 90 Mol.% der Reste X den oben angegebenen Formeln XVa oder XVb entsprechen.
   Besonders bevorzugt sind Polyimide, worin in den Strukturelementen der Formel XI X 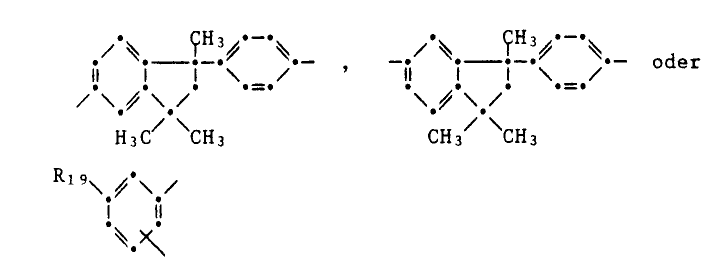 mit R₁₉ = H oder Methyl oder eine Mischung davon ist und Z 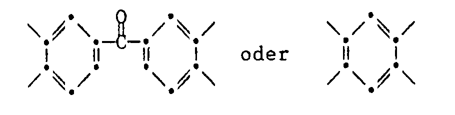 oder eine Mischung davon bedeutet, wobei der Anteil an Phenylindan-Einheiten in den Diaminkomponenten bevorzugt 70-100 Mol.% beträgt. Die obigen Polyimide weisen im allgemeinen eine inhärente Viskosität, gemessen bei 25°C an einer 0,5%igen Lösung in N-Methyl-2-pyrrolidon, zwischen 0,10 und 1,50, besonders 0,15 und 0,80 dl/g, auf.
   Die durchschnittlichen Molekulargewichte M̅ₙ (Zahlenmittel) liegen zweckmässig zwischen 10000 und 40000, bevorzugt zwischen 15000 und 25000.
2. Homo- und Copolyimide aus mindestens einer aromatischen Tetracarbonsäure und mindestens einem aromatischen Diamin, die im wesentlichen aus 5 bis 100 Mol.% mindestens eines Strukturelementes der Formel XVII 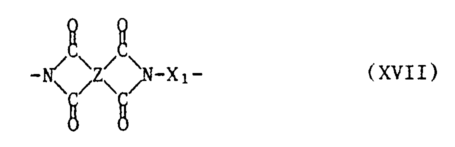 und 95-0 Mol.% mindestens eines Strukturelementes der Formel XVIII 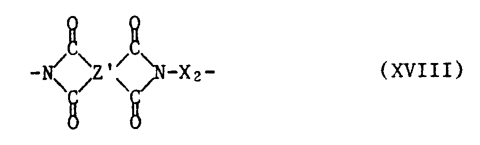 bestehen, worin die vier Carbonylgruppen an verschiedene C-Atome gebunden sind und je zwei Carbonylgruppen in ortho- oder peri-Stellung zueinander stehen,
   Z die unter Formel XI angegebene Bedeutung hat,
   Z' die gleiche Bedeutung wie Z hat oder ein von Z verschiedener vierwertiger aromatischer Rest ist,
   X₁ der zweiwertige Rest eines aromatischen Diamins ist, das in beiden ortho-Stellungen zu mindestens einem N-Atom durch Alkyl, Cycloalkyl, Alkoxy, Alkoxyalkyl oder Aralkyl substituiert ist oder worin zwei benachbarte C-Atome des aromatischen Restes durch Alkylen verbunden (substituiert) sind, und
   X₂ einen zweiwertigen, von X₁ verschiedenen Rest eines organischen Diamins bedeutet.
   Homo- und Copolyimide der obigen Art sind in der europäischen Patentveröffentlichung 0 132 221 A1 beschrieben.
   Die Strukturelemente der Formel XVII sind bevorzugt in einer Menge von 20-100 Mol.%, besonders 50-100 Mol.% und insbesondere 80-100 Mol.% und die Strukturelemente der Formel XVIII bevorzugt in einer Menge von 80 bis 0 Mol.%, besonders 50 bis 0 Mol.% und insbesondere 20 bis 0 Mol.% enthalten. In den Polymermolekülen können die einzelnen Z, Z', X₁ und X₂ unterschiedliche Bedeutungen haben, d.h. es können in der Kette verschiedene Strukturelemente der Formel XVII und/oder XVIII vorliegen.
   Z bzw. Z' in den Formeln XVII und XVIII stellen bevorzugt den Rest des Pyromellitsäuredianhydrids, einen Rest der Formel XIV oder ein Gemisch dieser Reste dar. Ganz besonders bevorzugt sind Z und/oder Z' der Rest des Pyromellitsäuredianhydrids oder eines Benzophenontetracarbonsäuredianhydrids oder Gemische dieser Reste.
   Alkyl- und Alkoxysubstituenten an aromatischen Resten X₁ können linear oder verzweigt sein und weisen beispielsweise 1-20, bevorzugt 1-6 und besonders 1-4 C-Atome auf. Alkoxyalkylsubstituenten können ebenfalls linear oder verzweigt sein und weisen bevorzugt 2-12, besonders 2-6 C-Atome, auf. Alkylensubstituenten haben insbesondere 3 oder 4 C-Atome, Cycloalkylsubstituenten 5-8, besonders 5 oder 6 Ringkohlenstoffatome und Aralkylsubstituenten 7-12 C-Atome. Bevorzugtes Alkoxyalkyl ist Ethoxymethyl und als Aralkyl wird Benzyl bevorzugt.
   Beispiele für definitionsgemäss Substituenten an aromatischen Resten X₁ sind: Methyl, Ethyl, Propyl, Isopropyl, n-Butyl, Isobutyl, Tertiärbutyl, Pentyl, Hexyl, Octyl, Dodecyl, Tetradecyl, Eicosyl, Cyclopentyl, Cyclohexyl, Methylcyclohexyl, Methoxy, Ethoxy, Propoxy, Butoxy, Pentoxy, Hexoylxy, Methoxymethyl, Methoxyethyl, Ethoxymethyl, Propoxymethyl, Butoxymethyl, Benzyl, Methylbenzyl und Phenylethyl. Bevorzugte Reste sind Methoxymethyl, Ethoxymethyl, Methyl, Ethyl, Isopropyl, Trimethylen, Tetramethylen. Besonders bevorzugt sind Isopropyl, Ethyl und insbesondere Methyl.
   X₁ kann als substituierter aromatischer Rest 8 bis 30, besonders 8 bis 25 C-Atome enthalten. Der aromatische Rest ist bevorzugt ein Pyridinrest und besonders ein Kohlenwasserstoffrest, vor allem jedoch ein zweiwertiger ein- oder zweikerniger Phenylrest, der definitionsgemäss durch Alkyl, Alkoxyalkyl, Alkoxy, Trimethylen oder Tetramethylen substituiert ist. Der aromatische Rest X₁ kann auch weitere Substituenten enthalten, z.B. Halogen, wie Cl oder Br. In einer bevorzugten Untergruppe sind die aromatischen Reste als einkernige Reste Phenylenreste und als zweikernige Reste Naphthylen- oder Biphenylenreste.
   Eine bevorzugte Untergruppe sind Polyimide, in denen X₁ in Formel XVII als aromatischer Rest den Formeln (10), (11) und/oder (12) entspricht 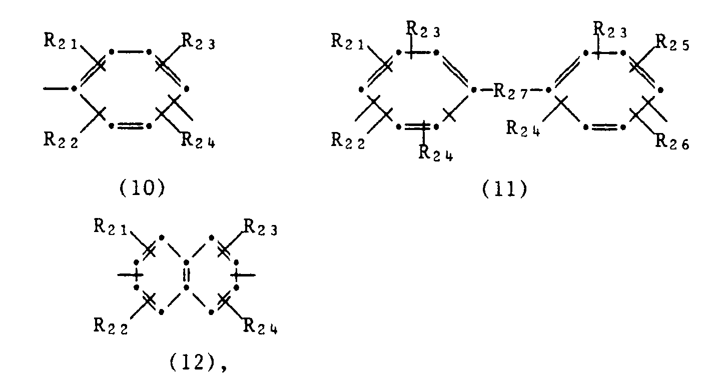 worin in Formel (10) die freien Bindungen in m- oder p-Stellung zueinander stehen, in Formel (11) die freien Bindungen bevorzugt in m- oder p-Stellung zur R₂₇-Gruppe stehen und R₂₁ und R₂₂ bzw. R₂₅ und R₂₆ in beiden o-Stellungen zu den freien Bindungen gebunden sind. In Formel (12) sind die freien Bindungen bevorzugt in 2-, 3-, 6- und 7-Stellung gebunden und R₂₁ und R₂₂ bzw. R₂₃ und R₂₄ befinden sich in den beiden o-Stellungen zu der freien Bindung.
   R₂₁ und R₂₂ bedeuten Alkyl oder Alkoxy mit 1-12 C-Atomen, Alkoxyalkyl mit 2-12 C-Atomen, Cyclopentyl, Cyclohexyl oder Benzyl, oder R₂₁ und R₂₃ sind in den Formeln (10) oder (11) in Nachbarstellung zueinander gebunden und stellen zusammen Trimethylen oder Tetramethylen dar, wobei R₂₂ auch ein Wasserstoffatom sein kann, R₂₃ und R₂₄ sind Wasserstoffatome oder haben unabhängig voneinander die Bedeutung von R₂₁ und R₂₂, oder R₂₃ und R₂₅ in Formel (11) sind in Nachbarstellung zueinander gebunden und bedeuten zusammen Trimethylen oder Tetramethylen. R₂₇ steht für eine direkte Bindung, -O-, -S-, -SS-, -SO-, -SO₂-, -CO-, -COO-, -NH-, 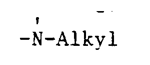 mit 1-6-C-Atomen, 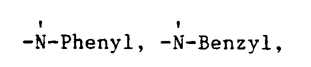 -CONH-, -CON-Alkyl mit 1-6 C-Atomen im Alkyl, -CON-Phenyl, -CON-Benzyl, 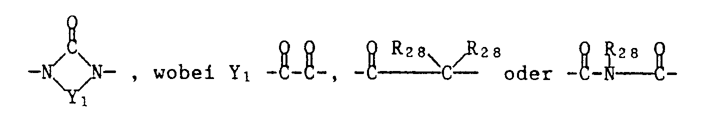 und R₂₈ ein Wasserstoffatom, C₁₋₆-Alkyl oder Phenyl bedeuten, für lineares oder verzweigtes Alkylen mit 1-3 C-Atomen, gegebenenfalls durch Cl oder F substituiertes Alkyliden mit 2-12 C-Atomen, Cycloalkyliden mit 5 oder 6 Ringkohlenstoffatomen, Phenylen, Phenylendioxy oder die Gruppe 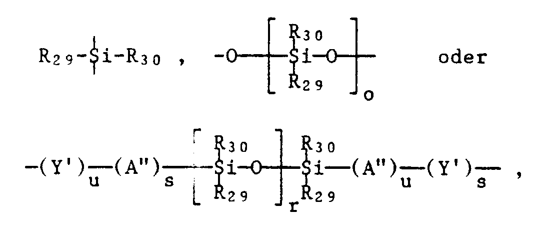 worin R₂₉ und R₃₀ Alkyl oder Alkoxy mit 1-6 C-Atomen, Phenyl, Benzyl, Phenyloxy oder Benzyloxy sind, r eine Zahl von 1-10, u und s unabhängig voneinander 0 oder 1 sind, Y' -O- oder -S-, A'' C₁₋₆-Alkylen und o eine Zahl von 1-100 bedeuten.
   R₂₁ und R₂₂ sind bevorzugt Alkyl mit 1-6 C-Atomen, besonders Methyl, Ethyl, n-Propyl und Isopropyl. Die freien Bindungen in Formel (11) befinden sich bevorzugt in m- und besonders in p-Stellung zur Gruppe R₂₁ bzw. R₂₅. Das Alkyl in Resten R₂₇ kann z.B. Methyl, Ethyl, n-Propyl, Isopropyl, n-Butyl oder n-Pentyl sein. R₂₇ als Alkylen ist bevorzugt Ethylen und besonders Methylen. Als Alkyliden enthält R₂₇ bevorzugt 2-6 C-Atome. Beispiele sind Ethyliden, 2,2-Butyliden, 2,2- oder 3,3-Pentyliden, Hexafluorpropyliden und besonders 2,2-Propyliden. R₂₇ als Cycloalkyliden kann z.B. Cyclopentyliden und besonders Cyclohexyliden sein. Die Gruppe R₂₇ ist bevorzugt eine direkte Bindung, -O-, -S-, -SO₂-, -CO-, Alkylen mit 1-3 C-Atomen oder Alkyliden mit 2-4 C-Atomen. Besonders bevorzugt ist R₂₇ eine direkte Bindung, -O- und insbesondere -CO- oder -CH₂-. R₂₉ und R₃₀ sind vorzugsweise Alkyl mit 1-4 C-Atomen, besonders Methyl, oder Phenyl. Y' steht bevorzugt für -O- und A'' ist bevorzugt Methylen oder Ethylen. o ist bevorzugt eine Zahl von 1-10 und r eine Zahl von 1-20, besonders 1-10.
   Besonders bevorzugt sind Polyimide, in denen X₁ in Formel XVII einen Rest der Formeln (13), (14), (15) oder (16) 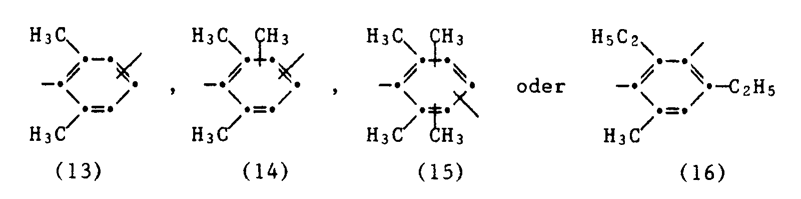 bedeutet, worin die freien Bindungen in m- oder p-Stellung zueinander stehen, oder einen Rest der Formel (17) 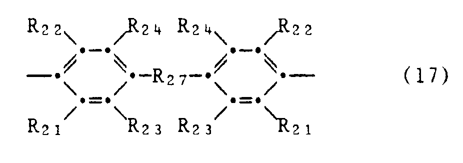 darstellt, worin R₂₁ und R₂₂ unabhängig voneinander Methyl, Ethyl, n-Propyl oder Isopropyl und R₂₃ und R₂₄ Wasserstoffatome sind oder die Bedeutung von R₂₁ haben, oder R₂₁ und R₂₃ zusammen Tri- oder Tetramethylen bedeuten und R₂₂ und R₂₄ Wasserstoffatome sind und R₂₇ eine direkte Bindung, -CH₂-, 2,2-Propyliden oder -CO- darstellt. Unter diesen zweikernigen Resten (17) sind besonders solche bevorzugt, worin R₂₁, R₂₂, R₂₃ und R₂₄ für Methyl stehen. Copolyimide, die mindestens zwei verschiedene Reste dieser Formeln enthalten, sind ebenfalls bevorzugt.
   Definitionsgemässe Copolyimide enthalten mindestens zwei verschiedene Strukturelemente, wobei sich die Zahl der verschiedenen Strukturelemente im wesentlichen nach den gewünschten Eigenschaften und dem Anwendungsgebiet richtet. Bevorzugt enthalten sie 2-4 verschiedene Strukturelemente.
   X₂ kann dieselbe Bedeutung wie X haben. Beispiele für cycloaliphatische Reste X bzw. X₂ sind: Cyclopentylen, 1,2-, 1,3- oder 1,4-Cyclohexylen, Methylcyclopentylen, Methyl- oder Dimethylcyclohexylen, 3,3'- oder 4,4'-Bis-cyclohexylen, 3,4'-Dimethyl-4,4'-bis-cyclohexylen, 4,4'-Bis-cyclohexylenether, -sulfon, -methan oder -2,2-propan. Besonders bevorzugt sind 1,4- oder 1,3-Cyclohexylen.
   Beispiel für araliphatische (alkylaromatische) Reste X bzw. X₂ sind: m- oder p-Benzylen, 3-Methyl-4-benzylen, 3-Ethyl-p-benzylen, 3,5-Dimethyl-p-benzylen, 3,5-Diethyl-p-benzylen, 3-Methyl-5-ethyl-p-benzylen.
   Die obigen Homo- und Copolyimide weisen im allgemeinen mittlere Molekulargewichte (Zahlenmittel M̅ₙ) von mindestens 2000, vorzugsweise mindestens 5000 auf. Die obere Grenze richtet sich im wesentlichen nach Eigenschaften, die die Verarbeitbarkeit bestimmen, wie z.B. deren Löslichkeit. Sie kann bis zu 200000, vorzugsweise 50000 und besonders 15000-20000 betragen.
3. Homo- und Copolymere mit einem mittleren Molekulargewicht von mindestens 2000, die mindestens 5 Mol.%, bezogen auf das Polymer, mindestens eines Strukturelementes der Formeln XIX oder XX enthalten, 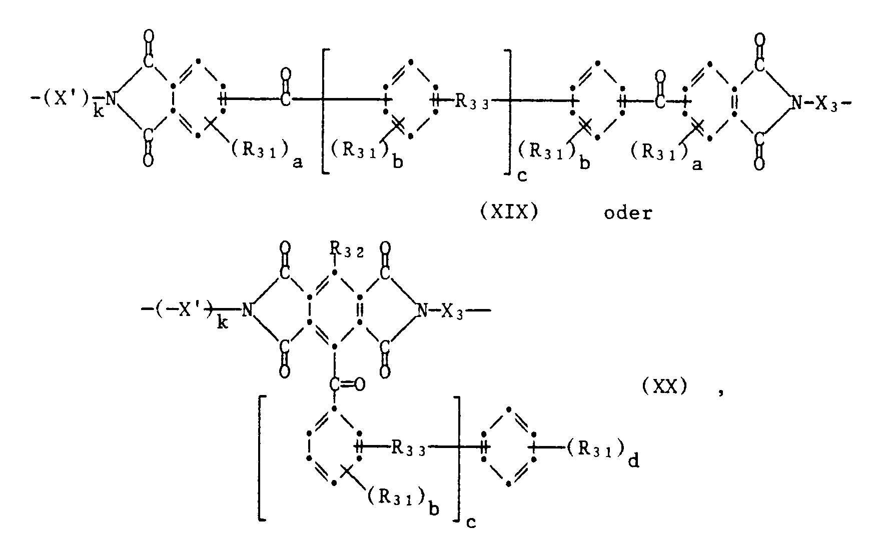 worin R₃₁ für Halogen, Nitro, C₁-C₆-Alkyl, C₁-C₆-Alkoxy, C₁-C₆-Alkylthio, das durch Phenyl substituiert sein kann, Phenyl, Phenoxy oder Phenylthio steht,
   R₃₂ für ein Wasserstoffatom oder Aroyl steht oder die gleiche Bedeutung wie R₃₁ hat,
   R₃₃ eine direkte Bindung oder eine Brückengruppe bedeutet,
   a für 0, 1, 2 oder 3, b für 0, 1, 2, 3 oder 4, c und d für 0, 1, 2, 3, 4 oder 5 stehen, k für 0 oder 1 steht, oder, wenn a, b und d 2 sind, beide R₃₁ in o-Stellung gebunden sind und zusammen -CH=CH-CH=CH- bedeuten, und
   X₃ und X' unsubstituierte oder substituierte zweiwertige aliphatische Reste, unsubstituierte oder substituierte cycloaliphatische oder araliphatische Reste, aromatische Reste, bei denen zwei Arylkerne über eine aliphatische Gruppe verknüpft sind, oder aromatische Reste sind, die durch mindestens eine Alkylgruppe, Cycloalkylgruppe, Alkoxygruppe, Alkoxyalkylgruppe oder Aralkylgruppe substituiert sind oder worin zwei benachbarte C-Atome des aromatischen Restes durch eine Alkylengruppe substituiert sind, wobei X₃ ein X₁ entsprechender aromatischer Rest ist, (Formel XVII), wenn k = 0 ist.
   Die obigen Polymeren weisen vorzugsweise mittlere Molekulargewichte (Zahlenmittel) von mindestens 5000 auf. Die obere Grenze richtet sich im wesentlichen nach Eigenschaften, die die Verarbeitbarkeit bestimmen, wie z.B. deren Löslichkeit. Sie kann bis zu 500000, vorzugweise bis zu 100000 und besonders bis zu 60000 betragen.
   R₃₁ ist als Halogen bevorzugt F oder Cl. Beispiele für R₃₁ als Alkyl, Alkoxy und Alkylthio sind Methyl, n-Propyl, i-Propyl, n-Butyl, n-Pentyl, n-Hexyl, Methoxy, Ethoxy, n-Propoxy, Methylthio, Ethylthio und Benzylthio.
   In den obigen Formeln stehen a, b und d bevorzugt für 1 und besonders für 0 und c steht bevorzugt für 1 oder 2 und besonders für 0.
   Bei der Brückengruppe R₃₃ kann es sich zum Beispiel um -O-, -S-, -SO-, -SO₂-, -CO-, -NR^{a}-, lineares oder verzweigtes C₁-C₁₀-Alkylen, das mit F oder Cl substituiert sein kann, -CO₂-, -CONR^{a}- 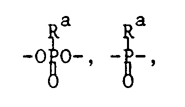 C₂-C₆-Alkyliden, das durch F oder Cl substituitert sein kann, Cycloalkyliden mit 5 oder 6 Ringkohlenstoffatomen, 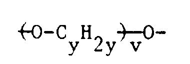 mit y = 2 bis 4 und v = 1 bis 4 oder 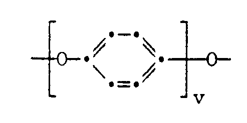 mit v = 1 bis 4 handeln. R^{a} kann C₁-C₆-Alkyl, Phenyl, Benzyl oder Cyclohexyl sein.
   Weitere Brückengruppen sind zum Beispiel -N=N- und 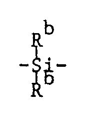 und 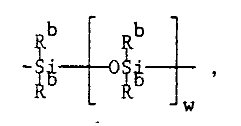 worin R^{b} C₁-C₆-Alkyl, besonders Methyl, Phenyl oder Benzyl ist und w für eine Zahl von 1-10 steht.
   Bevorzugt ist R₃₃ eine direkte Bindung, -O-, -S-, -CH₂-, Ethyliden, 2,2-Propyliden und besonders -CO-.
   R₃₂ ist als Aroyl besonders Benzoyl. Bevorzugt ist R₃₂ ein Wasserstoffatom.
   Die Carbonylgruppen in Formel XIX befinden sich bevorzugt in m-Stellung zu den Carbonylgruppen der Imidgruppe. Wenn c = 0 ist, befinden sich auch die Carbonylgruppen zueinander bevorzugt in m-Stellung. Die R₃₃-Gruppe kann sich in p-Stellung, bevorzugt in m-Stellung zu den Carbonylgruppen befinden.
   Bevorzugte Strukturelemente entsprechen den Formeln XIXa und XXa 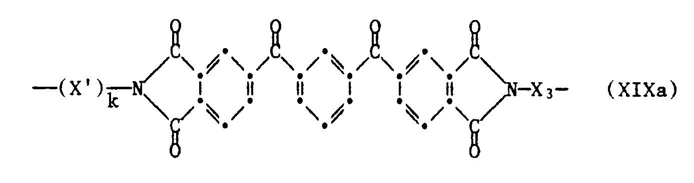 und 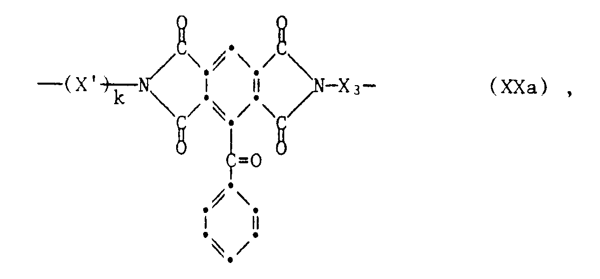 worin k , X₃ und X' die oben angegebene Bedeutung haben. Beispiele von Resten X' und X₃ sind oben unter X, X₁ oder X₂ angegeben.
4. Homo- oder Copolyimide mit wiederkehrenden Strukturelementen der Formel XXI 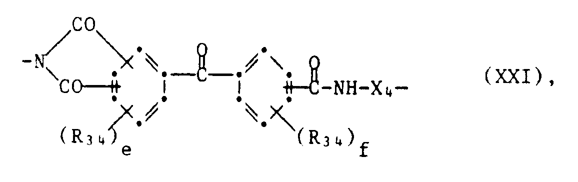 worin die Imidgruppe an zwei benachbarte C-Atome gebunden ist, e für 0 oder eine Zahl von 1-4 steht und f für 0 oder eine Zahl von 1-3 steht, R₃₄ Alkyl oder Alkoxy mit weniger als 6 C-Atomen, Aryl mit 6-10 C-Atomen, Aralkyl mit 7-10 C-Atomen oder Halogen bedeutet und X₄ einen unsubstituierten oder substituierten zweiwertigen aliphatischen oder aromatischen Kohlenwasserstoffrest bedeutet.
   Im Falle von Copolyimiden sind darin die Strukturelemente der Formel XXI bevorzugt zu mindestens 10 Mol.% und besonders bevorzugt zu mindestens 50 Mol.% vorhanden. Derartige Homo- oder Copolyimide sind in der europäischen Patentveröffentlichung 0 138 768 A1 beschrieben.
   e und f stehen bevorzugt für 1 und insbesondere für 0. R₃₄ ist bevorzugt Alkyl oder Alkoxy mit 1-4 C-Atomen, besonders Methyl, Ethyl und Methoxy, oder Halogen, besonders Br oder Cl.
   Die Carbonylgruppe in den Strukturelementen der Formel XXI ist bevorzugt in meta-Stellung und besonders in para-Stellung zur Carbonylbrückengruppe gebunden, und die Imidgruppe ist vorzugsweise in ortho-/meta-Stellung und besonders in meta-/para-Stellung zur Carbonylbrückengruppe gebunden.
   X₄ in der Bedeutung als zweiwertiger aliphatischer Rest enthält bevorzugt 2-30 C-Atome, besonders 2-12 C-Atome. Als aromatische Reste X₄ kommen solche der oben unter X, X₁ und X₂ erwähnten Art in Betracht.
5. Homo- und Copolyimide aus mindestens einer aromatischen Tetracarbonsäure und mindestens einem Diamin, die im wesentlichen 0,1 bis 100 Mol.% mindestens eines Strukturelementes der Formel XXII 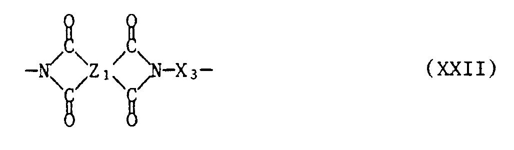 und 99,9 bis 0 Mol.% mindestens eines Strukturelementes der Formel XVIII enthalten, worin Z₁ für mindestens einen vierwertigen Rest der Formeln XXIII, XXIV, XXV oder XXVI 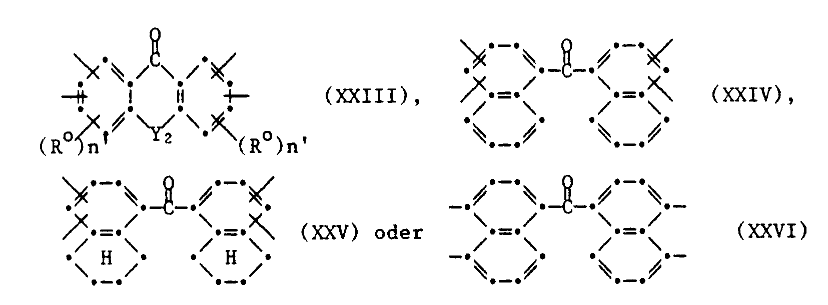 steht, in denen die freien Bindungen in ortho-Stellung zueinander gebunden sind und Y₂ eine direkte Bindung, -CH₂-, -(CH₂)₂-, -O-, -S-, -SO-, -SO₂-, -CO-, -NR₃₅- oder -CR₃₅R₃₆- bedeutet, wobei R₃₅ ein Wasserstoffatom, C₁-C₁₀-Alkyl, Phenyl, Naphthyl oder Phenyl(C_{g}H_{2g})- mit g = 1 bis 4 ist und R₃₆ die Bedeutung von R₃₅ mit Ausnahme der Bedeutung eines Wasserstoffatoms hat, R^{o} für C₁-C₁₀-Alkyl, Halogen, -CN, -NO₂, C₁-C₁₂-Alkoxy, Phenoxy, Naphthyloxy oder Phenyl-(C_{g}H_{2g})- mit g = 1-4 steht, n' = 0, 1 oder 2 ist und X₃ die oben angegebene Bedeutung hat.
   Die Strukturelemente der Formel XXII sind bevorzugt in einer Menge von 5-100 Mol.%, bevorzugter 30-100 Mol.%, besonders 60-100 Mol.% und insbesondere 80-100 Mol.% und die Strukturelemente der Formel XVIII bevorzugt in einer Menge von 95-0 Mol.%, bevorzugter 70 bis 0 Mol.%, besonders 60 bis 0 Mol.% und insbesondere 20 bis 0 Mol.% enthalten.
   Die freien Bindungen in den Resten der Formeln XXIII bis XXV sind bevorzugt in meta- und para-Stellung zur CO-Gruppe gebunden.
   R^{o} als Alkyl oder Alkoxy kann linear oder verzweigt sein und enthält vorzugsweise 1 bis 4 C-Atome. Beispiele sind Methyl, Methoxy, Ethyl, Ethoxy, n-Propyl, n-Propoxy, Isopropyl, Isopropoxy, n-Butyl und n-Butoxy. R^{o} als Halogen ist bevorzugt Chlor und in der -C_{g}H_{2g}-Gruppe ist g bevorzugt 1 oder 2. In Formel XXIII steht n' bevorzugt für 0.
   R₃₅ bzw. R₃₆ als Alkyl enthalten bevorzugt 1 bis 4 C-Atome. Das Alkyl kann linear oder verzweigt sein. Beispiele sind Methyl, Ethyl, n-Propyl, Isopropyl und n-Butyl. In der -(C_{g}H_{2g})-Gruppe ist g bevorzugt 1 oder 2.
   Y₂ in Formel XXIII ist bevorzugt eine direkte Bindung, -O-, -S-, -CH₂- oder -CO-.
6. Homo- und Copolyimide, die Strukturelemente von aromatischen Aminodicarbonsäuren enthalten, mit einer inhärenten Viskosität von mindestens 0,1 dl/g, gemessen bei 25°C in einer Lösung von 0,5 Gewichtsprozent Polyimid in N-Methylpyrrolidon, die dadurch gekennzeichnet sind, dass sie wiederkehrende Strukturelemente der Formel XXVII enthalten 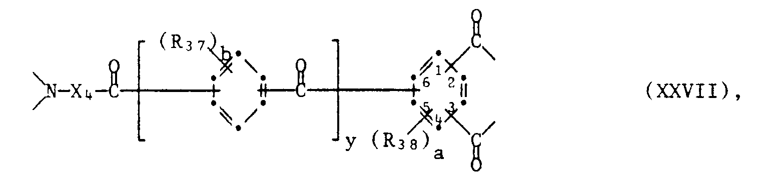 worin
   R₃₇ und R₃₈ für Halogen, Nitro, Aryl, Aryloxy, Alkyl oder Alkoxy stehen, b 0 oder eine Zahl von 1-4, a 0 oder eine Zahl von 1 bis 3 und y 0, 1 oder 2 bedeuten, die freien Carbonylgruppen in ortho-Stellung zueinander gebunden sind und X₄ einen zweiwertigen aromatischen Rest bedeutet, der durch mindestens eine Alkylgruppe oder Aralkylgruppe substituiert ist.
   Die inhärente Viskosität beträgt bevorzugt mindestens 0,2 dl/g, insbesondere 0,2 bis 2,0 dl/g. b, a und y stehen bevorzugt für 0.
   R₃₇ und R₃₈ sind als Halogen bevorzugt F oder Cl, als Aryl Phenyl, als Aryloxy Phenoxy und enthalten als Alkyl und Alkoxy bevorzugt 1-12 besonders 1-4 C-Atome. Beispiele sind Methyl, Ethyl, n-Propyl, i-Propyl, n-Butyl, Methoxy und Ethoxy. Die Carbonylgruppen sind vorzugsweise in 2-, 3- und 6-Stellung gebunden.
   Der aromatische Rest X₄ ist bevorzugt in mindestens einer, besonders in beiden ortho-Stellungen zum N-Atom durch Alkyl oder Aralkyl substituiert. Der Substituent ist als Aralkyl besonders Benzyl. Als Alkyl enthält der Substituent bevorzugt 1-12, besonders 1-4 C-Atome. Das Alkyl kann linear oder verzweigt sein. Besonders bevorzugt sind Aethyl, Methyl, Ethyl und Isopropyl. Weitere Beispiele sind n-Propyl, n-Butyl, Isobutyl, n-Pentyl, n-Hexyl, n-Octyl, n-Decyl und n-Dodecyl.
   Der aromatische Rest X₄ ist bevorzugt ein durch Alkyl substituierter Phenylenrest oder Biphenylenrest. Insbesondere entspricht der Rest X₄ der Formel XXVIII 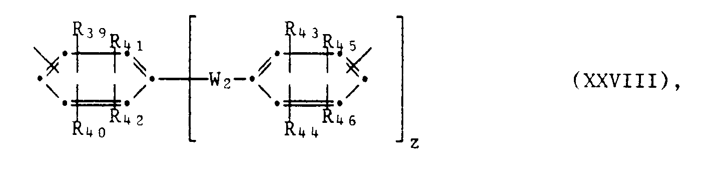 worin z 0 oder 1 ist, W₂ eine direkte Bindug oder eine Brückengruppe bedeutet, R₃₉ Alkyl mit 1-4 C-Atomen und R₄₀ bis R₄₆ unabhängig voneinander Wasserstoffatome oder Alkyl mit 1-4 C-Atomen sind, und die freien Bindungen in meta- oder para-Stellung zur W₂-Gruppe gebunden sind.
   In einer Ausführungsform sind R₃₉ und R₄₀ sowie R₄₅ und R₄₆ in ortho-Stellung zur freien Bindung gebunden und bedeuten C₁-C₄-Alkyl. In einer besonders bevorzugten Ausführungsform steht z in Formel XXVIII für 0 und R₃₉ bis R₄₂ für C₁-C₄-Alkyl, besonders Methyl oder Ethyl.
   Die Brückengruppe W₂ kann die gleiche Bedeutung wie W¹ haben. Bevorzugt ist W₂ eine direkte Bindung, -S-, -O-, -SO-, -SO₂-, -CO-, -CH₂-, C₂-C₆-Alkyliden, wie z.B. Ethyliden, 1,1- oder 2,2-Propyliden, Butyliden, Cyclopentyliden oder Cyclohexyliden.
   Besonders bevorzugt enthalten die Polyimide Strukturelemente der Formel 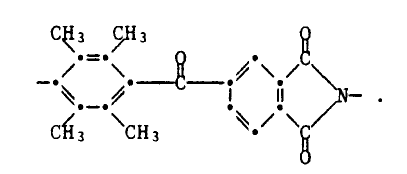 In einer anderen Ausführungsform enthalten die Polyimide
   a) 0,1-100 Mol.% Strukturelemente der Formel XXVII und
   b) 99,9-0 Mol.% Strukturelemente der Formel XVIII.
7. Polyetherimide der Formel XXIX 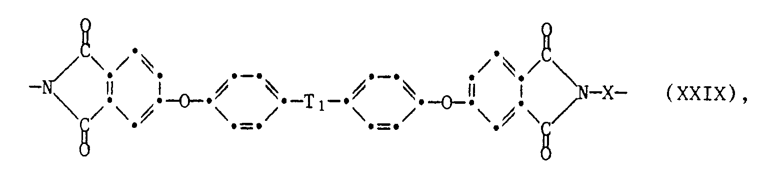 worin T₁ und X die oben angegebene Bedeutung haben (s. Formel VI bzw. XI).T₁ ist bevorzugt -CH₂- und besonders 2,2-Propyliden. X ist bevorzugt eine Gruppe der Formel XV und vor allem eine Gruppe der Formel XVa oder XVb. Ganz besonders bevorzugt stellt X m-Phenylen dar.

Besonders bevorzugt sind Polyimide des Typs 1 und 2, wobei die dort angegebenen Bevorzugungen gelten.

Die erfindungsgemäss einzusetzenden Polyimide sind bekannt oder können nach an sich bekannten Methoden hergestellt werden, indem man entsprechende Säure- und Diaminkomponenten oder Aminodicarbonsäure-Komponenten auf übliche Weise kondensiert und die erhaltenen Polyamidsäuren cyclisiert.

Als organische Lösungsmittel für die erfindungsgemäss zu verwendenden Polyimide eignen sich z.B. polare, besonders polare aprotische Lösungsmittel oder Gemische davon, wie z.B. Ether, wie Dibutylether, Tetrahydrofuran, Dioxan, Methylethylenglykol, Dimethylethylenglykol, Dimethyldiethylenglykol, Diethyldiethylenglykol, Dimethyltriethylenglykol; halogenierte Kohlenwasserstoffe, wie Methylenchlorid, Chloroform, 1,2-Dichlorethan, 1,1,2-Trichlorethan, 1,1,2,2-Tetrachlorethan; Carbonsäureester und Lactone, wie Essigsäureethylester, Propionsäuremethylester, Benzoesäureethylester, 2-Methoxyethylacetat, γ-Butyrolacton, δ-Valerolacton und Pivalolacton; Carbonsäureamide und Lactame, wie Formamid, Acetamid, N-Methylformamid, N,N-Dimethylformamid, N,N-Diethylformamid, N,N-Dimethylacetamid, N,N-Diethylacetamid, γ-Butyrolactam, ε-Caprolactam, N-Methylpyrrolidon, N-Acetylpyrrolidon, N-Methylcaprolactam, Tetramethylharnstoff, Hexamethylphosphorsäureamid; Sulfoxide, wie Dimethylsulfoxid, Sulfone, wie Dimethylsulfon, Diethylsulfon, Trimethylsulfon, Tetramethylensulfon, primäre, sekundäre und tertiäre Amine, wie Methylamin, Ethylamin, Propylamin, Pyrrolidin, Piperidin, Morpholin, Dimethylamin, Diethylamin, Methylethylamin, Trimethylamin, Triethylamin, N-Methylpyrrolidin, N-Methylpiperidin, N-Methylmorpholin, substituierte Benzole, wie Chlorbenzol, Nitrobenzol oder Kresol.

Die Komponenten A) (Harz) und B) bzw. C) (Härter) ergeben beim Erhitzen vernetzte Produkte. Die Umsetzung erfolgt im allgemeinen bei Temperaturen zwischen 50 und 300°C, besonders 100 und 250°C. Die Mengenverhältnisse werden zweckmässig so gewählt, dass auf eine C=C-Doppelbindung des Polyimids A) 0,4 bis 1,2, bevorzugt 0,8 bis 1,0, phenolische OH-Gruppen in den Komponenten B) und/oder C) kommen. Die Härtung kann auch in Gegenwart von Katalysatoren oder Beschleunigern vorgenommen werden. Als solche eignen sich z.B. Verbindungen der oben bei der Addukt-Herstellung genannten Art oder auch Harnstoffderivate, wie N-4-Chlorphenyl-N',N'-dimethylharnstoff (Monuron) und N-3-Chlor-4-methylphenyl-N',N'-dimethylharnstoff (Chlortoluron). Im allgemeinen kann jedoch auf den Zusatz von Härtungskatalysatoren und -beschleunigern verzichtet werden.

Werden erfindungsgemässe Gemische aus Komponenten A), B) und D) oder Gemische aus Komponenten A), B), C) und D) verwendet, so werden im allgemeinen zuerst die Komponenten B) und D) bzw. die Komponenten B), C) und D) bei erhöhter Temperatur, z.B. zwischen 120 und 200°C vermischt bzw. homogenisiert. Darauf gibt man das Polyimid A) zu und härtet wie oben angegeben.

Die Polyimide D) werden vorzugsweise in Mengen von 2-20 Gewichtsteilen, besonders 3-12 Gewichtsteilen, bezogen auf 100 Gewichtsteile Harz/Härter-Gemisch eingesetzt.

Bevorzugt sind erfindungsgemässe Mischungen aus Komponenten A), B) und C) und vor allem Mischungen aus Komponenten A), B), C) und D). Dabei gilt in Bezug auf bevorzugte Komponenten A), B, C) und D) das oben Angegebene.

Die erfindungsgemässen Mischungen können auch weitere übliche Zusätze enthalten, z.B. Weichmacher, Streck-, Füll- und Verstärkungsmittel, wie beispielsweise Textilfasern, Glasfasern, Asbestfasern, Borfasern und Kohlenstoff-Fasern, mineralische Silikate, Metallpulver, z.B. Aluminiumpulver oder Eisenpulver, ferner Pigmente und Farbstoffe, wie Russ, Oxidfarben und Titandioxid, Flammschutzmittel, Thixotropiemittel, Verlaufmittel, Haftvermittler, Antioxidantien und Lichtschutzmittel.

Die Herstellung der erfindungsgemässen Mischungen kann auf an sich bekannte Weise durch Vermischen und Erwärmen der Komponenten auf mässig erhöhte Temperaturen vorgenommen werden. Dabei gehen die Komponenten im allgemeinen in Lösung. Komponenten B), C) und/oder D) können aber auch vorerst zusammengeschmolzen und dann in einem geeigneten Lösungsmittel der oben beschriebenen Art gelöst und mit der Komponente A) versetzt werden.

Die erfindungsgemässen Gemische können vielseitig angewendet werden, z.B. als Laminier- oder Elektroharze, als Klebstoffe oder Klebefilme für Hochtemperaturanwendungen oder zur Herstellung von Beschichtungen. Insbesondere finden sie Anwendung zur Herstellung von kohlefaser- und glasfaserverstärkten Verbundwerkstoffen, besonders für deren Herstellung aus unidirektionalen Prepregs oder vorimprägnierten Rovings, z.B. für den Flugzeugbau, für Flugkörper und im Motorenbau, z.B. zur Herstellung von Gehäusen und Pleuelstangen, oder zur Herstellung von Laminaten (Prepregs), vor allem für gedruckte Schaltungen. Als Verarbeitungshilfsmittel für die Herstellung von Bändern oder Bahnen eignet sich z.B. der Zusatz von Phthalsäureestern und Cyanursäureestern, vor allem Phthalsäuredi-n-butyl-, -di-n-octyl- oder diallylester sowie Cyanursäuretriallylester oder Gemische davon, zweckmässig in Mengen von 1-20, vorzugsweise 4-10 Gewichtsteilen, bezogen auf 100 Gewichtsteile der Komponenten A) + B).

Die erfindungsgemässen Mischungen zeichnen sich durch ihre gute Verarbeitbarkeit aus, besonders bei der Herstellung von Klebefilmen, Prepregs und Verbundwerkstoffen. Die löslichen Polyimide D) zeigen eine gute Verträglichkeit mit der Harz/Härter-Mischung, sodass es während der Verarbeitung nicht zu einem Ausfällen des löslichen Polyimids kommt. Die mit den erfindungsgemässen Mischungen erhaltenen gehärteten Produkte zeichnen sich durch verbesserte Eigenschaften, vor allem gute mechanische und thermische Eigenschaften, wie erhöhte Biegefestigkeit und Randdehnung, hohe Glasumwandlungstemperaturen und vor allem eine hohe Bruchzähigkeit aus.

Die Erfindung wird durch die folgenden Beispiele näher erläutert.

Beispiel 1: 26,8 g (0,087 Mol) 2,2-Bis(4-hydroxy-3,5-diallylphenyl)propan werden mit 7,2 g eines Bis(4-hydroxyphenyl)-methan-Diglycidylethers [Bisphenol-F-Diglycidylether] mit einem Epoxidäquivalentgewicht von 165 (entsprechend 0,25 Aequivalenten Epoxidgruppen pro Aequivalent phenolische OH) gemischt und während 30 Min. mit 0,2 % des Gemisches von 2-Phenylimidazols auf 150°C erwärmt. Die Mischung, enthaltend epoxidgruppenfreies Addukt aus dem 2,2-Bis(4-hydroxy-3,5-diallylphenyl)propan und dem Bisphenol-F-Diglycidylether sowie 13,4 g nicht umgesetztes 2,2-Bis(4-hydroxy-3,5-diallylphenyl)propan, wird anschliessend bei 150°C mit 35,8 g N,N'-4,4'-Diphenylmethan-bis-maleinimid (0,1 Mol) gut vermischt, während 15 Minuten bei 5 bar entgast und in Formen der Abmessungen 80x60x4 mm gegossen. Danach wird während 1 h bei 180°C, während 2 h bei 200°C und während 6 h bei 250°C gehärtet. An diesen Prüfkörpern werden die Biegefestigkeit und die Randdehnung ermittelt.

Ein Teil der noch nicht ausgehärteten Mischung wird zur Messung der Gelierzeit und ein weiterer Teil zur Bestimmung der Bruchzähigkeit (BZ) nach dem Doppeltorsionsversuch gemäss P.W.R. Beaumont und J.R. Young, J.Mater.Sci.10,1334(1975) und 11,776(1979) verwendet. Zur Bestimmung der Bruchzähigkeit werden zwei mit Chromschwefelsäure vorbehandelte Aluminiumplatten (Extrudal 050 der Fa. Alusuisse, mit 0,5 Gew.% AlMgSi) der Abmessungen 200x20x5 mm mit dem härtbaren Gemisch verklebt und unter den oben angegebenen Bedingungen unter Anwendung eines leichten Druckes gehärtet. Bei dieser Methode wird die Rissfortpflanzung in der Verklebung gemessen, d.h. aus der maximalen Last für die Rissfortpflanzung in der Verklebung wird die Bruchenergie in J/m² berechnet. Es werden die folgenden Resultate erhalten:

| | |
|---|---|
| Gelierzeit bei 160°C | 18 Min. |
| Biegefestigkeit nach ISO 178 (direkt nach Härtung) | 173 MPa |
| Biegefestigkeit nach ISO 178 (nach 30 Tagen bei 180°C in der Luft) | 167 MPa |
| Randdehnung nach ISO 178 (direkt nach Härtung) | 6,4 % |
| Randdehnung nach ISO 178 (nach 30 Tagen bei 180°C) | 5,1 % |
| Bruchzähigkeit | 121 J/m². |

Beispiele 2-5: 26,8 g (0,087 Mol) 2,2-Bis(4-hydroxy-3,5-diallylphenyl)propan werden mit je 3,75 g der Polyimide I-IV aus 1,1,3-Trimethyl-3-p-aminophenyl-5(6)aminoindan und 3,3',4,4'-Benzophenontetracarbonsäuredianhydrid mit den unten angegebenen durchschnittlichen Molekulargewichten (bestimmt mittels Gelpermeationschromatographie, GPC) und Staudinger Indices R [hergestellt gemäss US-PS 3.856.752] versetzt und bei 180°C gut gemischt. Anschliessend gibt man 35,8 g (0,1 Mol) N,N',4,4'-Diphenylmethan-bis-maleinimid zu und verarbeitet das Gemisch wie im Beispiel 1 angegeben [Gewichtsverhältnis Polyimid:Harz/Härter-Mischung = 6:100]. Die Prüfung der gehärteten Produkte erfolgt, wo nichts anderes angegeben, ebenfalls wie im Beispiel 1 beschrieben. Die Glasumwandlungstemperatur Tg wird als maximale Eindringgeschwindigkeit eines belasteten Stempels bei der thermo-mechanischen Analyse gemäss R. Schmid und M. Fischer in "Progress Advanced Materials and Processes", Montreux 1984, bestimmt.

Es werden die folgenden Polyimide verwendet:

| | Staudinger Index R | durchschnittl. Molekulargewicht M̅ₙ |
|---|---|---|
| Polyimid I | 0,63 | 18000 |
| Polyimid II | 0,84 | nicht bestimmt |
| Polyimid III | 0,91 | 27500 |
| Polyimid IV | 1,13 | nicht bestimmt |

Die Prüfergebnisse sind in der folgenden Tabelle I zusammengefasst.

**Tabelle I**

| Beispiel Nr. | 2 Polyimid I | 3 Polyimid II | 4 Polyimid III | 5 Polyimid IV |
|---|---|---|---|---|
| Tg °C | 304 | 309 | 304 | 310 |
| Biegefestigkeit MPa | 161 | 155 | 162 | 153 |
| Randdehnung % | 5,3 | 4,8 | 5,2 | 4,7 |
| Bruchzähigkeit J/m² | 170 | 122 | 222 | 178 |

Beispiele 6-8: 26,8 g (0,087 Mol) 2,2-Bis(4-hydroxy-3,5-diallylphenyl)propan werden mit je 2,1 g der folgenden Polyimide V-VII versetzt und bei 180°C gut gemischt:
Polyimid V aus 3,3'-Dimethyl-5,5'-diethyl-4,4'-diaminodiphenylmethan (Komponente A) und Pyromellitsäuredianhydrid,
Polyimid VI aus 0,7 Mol Komponente (A) und 0,3 Mol
2,6-Diethyl-4-methyl-m-phenyldiamin (Komponente B) sowie 1 Mol Pyromellitsäuredianhydrid,
Polyimid VII aus 0,4 Mol Komponente (A) und 0,6 Mol Komponente (B) sowie 1 Mol Pyromellitsäuredianhydrid,
jeweils hergestellt gemäss der europäischen Patentveröffentlichung 0 132 221 A1.
Anschliessend gibt man 35,8 g (0,1 Mol) N,N'-4,4'-Diphenylmethan-bis-maleinimid zu und verarbeitet das Gemisch wie im Beispiel 1 angegeben [Gewichtsverhältnis Polyimid:Harz/Härter-Mischung = 3:100)]. Die Prüfung der erhaltenen Produkte erfolgt ebenfalls wie im Beispiel 1 beschrieben. Die Resultate sind in Tabelle II zusammengefasst.

**Tabelle II**

| Beispiel Nr. | 6 Polyimid V | 7 Polyimid VI | 8 Polyimid VII |
|---|---|---|---|
| Tg °C | 329 | 326 | 326 |
| Biegefestigkeit MPa | 146 | 163 | 149 |
| Randdehnung % | 4,7 | 5,3 | 4,6 |
| Bruchzähigkeit J/m² | 171 | *) | 158 |
| *) nicht bestimmt wegen Adhäsionsbruch. | | | |

Beispiel 9: 26,8 g (0,087 Mol) 2,2-Bis-(4-hydroxy-3,5-diallylphenyl)-propan werden bei 180°C mit 7,5 g Polyimid I (vgl. Beispiel 2) gemischt. Nach Erhalten einer homogenen Lösung werden 35,8 g N,N',4,4'-Diphenylmethan-bis-maleinimid zugesetzt (entsprechend ca. 12,7 Gewichtsteilen Polyimid I auf 100 Gewichtsteile der Harz-Härter-Mischung), und das Gemisch wird wie in Beispiel 1 beschrieben verarbeitet und gehärtet. Es wird eine Bruchzähigkeit von 354 J/m² ermittelt. Bei Verwendung von 30 Gewichtsteilen Polyimid I pro 100 Gewichtsteile Harz/Härter-Mischung erhält man eine Bruchzähigkeit von 322 J/m².

Beispiel 10: 26,8 g (0,087 Mol) 2,2-Bis(4-hydroxy-3,5-diallylphenyl)propan werden bei 180°C mit 7,5 g Polyimid I zusammengeschmolzen, in 66,3 ccm Methylenchlorid gelöst (ca. 50%ige Lösung) und mit 35,8 g N,N',4,4'-Diphenylmethan-bis-maleinimid (0,1 Mol) versetzt. Mit der erhaltenen Lösung werden Kohlefaserstränge aus Kohlefasern Typ T 400 der Fa. Toray imprägniert, und auf einem Trommelwickler wird ein unidirektionaler Prepreg hergestellt. Dabei wird das Lösungsmittel mittels Infrarotstrahler abgedampft. Der Prepreg wird zu einem 2 mm dicken unidirektionalen Laminat verpresst und wie in Beispiel 1 angegeben gehärtet. Am Laminat (65 Gew.% Kohlefasern) werden die folgenden Festigkeiten ermittelt:

| | |
|---|---|
| Biegefestigkeit quer zur Faser (Prüfkörper 80x15x4 mm) | 88 MPa |
| Biegefestigkeit parallel zur Faser | 1700 MPa. |

Beispiel 11: Analog Beispiel 10 wird ein weiteres unidirektionales Kohlefaserlaminat hergestellt, wobei die 26,8 g 2,2-Bis(4-hydroxy-3,5-diallylphenyl)propan vor der Zugabe des Polyimids mit 7,2 g eines Bis(4-hydroxyphenyl)methan-diglycidylethers mit einem Epoxidaquivalentgewicht von 165 (entsprechend 0,25 Aequivalenten Epoxidgruppen pro Aequivalent phenolische OH) während 30 Minuten bei 150°C vorreagiert werden. Das erhaltene Gemisch enthält neben dem epoxidfreien Addukt noch ca. 13,4 g nicht reagiertes 2,2-Bis(4-hydroxy-3,5-diallylphenyl)propan. Die weitere Verarbeitung erfolgt wie im Beispiel 10 beschrieben. Am Laminat (62 % Gew.% Kohlefasern) werden die folgenden Festigkeiten ermittelt:

| | |
|---|---|
| Biegefestigkeit quer zur Faserrichtung: | 92 MPa |
| Biegefestigkeit in Faserrichtung: | 2010 MPa |
| interlaminare Scherfestigkeit nach ANSI 2344-76: | 119 MPa |
| interlaminare Scherfestigkeit nach 60 Tagen in Motorenöl bei 170°C: | 63 MPa. |

Beispiele 12-15: Es werden weitere Formkörper hergestellt und geprüft wie folgt:
Beispiel 12: wie Beispiel 1, aber unter Verwendung von 24,4 g (0,087 Mol) Bis(4-hydroxy-3,5-diallylphenyl)methan anstelle von 26,8 g 2,2-Bis(4-hydroxy-3,5-diallylphenyl)propan. Das erhaltene Gemisch enthält ca. 12,2 g nicht reagiertes Bis(4-hydroxy-3,5-diallylphenyl)methan.

Beispiel 13: wie Beispiel 2, aber unter Verwendung von 24,4 g (0,087 Mol) Bis(4-hydroxy-3,5-diallylphenyl)methan anstelle von 26,8 g 2,2-Bis(4-hydroxy-3,5-diallylphenyl)propan und 4,0 g Polyimid I (6 Gewichtsteile auf 100 Gewichtsteile Harz/Härter).

Beispiel 14: wie Beispiel 1, aber unter Verwendung einer äquivalenten Menge (9,4 g) eines 2,2-Bis(4-hydroxyphenyl)propan-Diglycidylethers (Bisphenol-A-Diglycidylether) mit einem Epoxidäquivalentgewicht von 187 anstelle der 7,2 g Bisphenol-F-Diglycidylether.

Beispiel 15: wie Beispiel 1, aber unter Verwendung einer äquivalenten Menge (20,7 g) eines 2,2-Bis(4-hydroxyphenyl)propan-Diglycidylethers mit einem Epoxidäquivalentgewicht von 400 anstelle der 7,2 g Bisphenol-F-Diglycidylether.

Die Prüfresultate sind in Tabelle III zusammengefasst.

**Tabelle III**

| Beispiel Nr. | 12 | 13 | 14 | 15 |
|---|---|---|---|---|
| Biegefestigkeit MPa | 136 | 144 | 148 | 122 |
| Randdehnung % | 3,3 | 4,1 | 4,4 | 2,8 |

Beispiel 16: 26,8 g (0,087 Mol) 2,2-Bis(4-hydroxy-3,5-diallylphenyl)propan, 3,2 g (ca. 5,1 %) Dibutylphthalat und 35,8 g N,N',4,4'-Diphenylmethan-bis-maleinimid werden bei ca. 150°C gut gemischt und nach dem Abkühlen in einer Lösung von 500 g Methylenchlorid und 7,9 g Polyimid I (ca. 12 Gewichtsteile Polyimid auf 100 Gewichtsteile Harz/Härter) gelöst. Mit der Lösung wird ein 6K-Rowing C-300-Faser (Fa. Toray) imprägniert und unter Abdampfen des Lösungsmittels auf eine Spule aufgewickelt. Der imprägnierte Rowing weist eine gute Geschmeidigkeit auf. Er wird mittels kurzfristiger Erwärmung auf einen vorgeheizten Dorn (ca. 120°C) aufgewickelt (Durchmesser 40 mm, Wandstärke 1 mm). Die Härtung erfolgt wie in Beispiel 1 beschrieben.

Beispiel 17: 35,2 g (0,09 Mol) Addukt entsprechend Beispiel 1 werden auf 150°C erwärmt und mit 2,46 g (0,1 Mol) Diallylphthalat und 3,7 g Di-n-octylphthalat (5 Gew.%) vermischt. Anschliessend werden bei der gleichen Temperatur 35,8 g (0,1 Mol) Bismaleinimid entsprechend Beispiel 1 gelöst. Die Verarbeitung und Härtung werden analog Beispiel 1 vorgenommen. Es werden die folgenden Eigenschaften gemessen:

| | |
|---|---|
| T_{g} | 350° |
| Biegefestigkeit nach ISO 178 | 143 MPa |
| Randdehnung nach ISO 178 | 4,6 %. |

Die erkaltete Harzmischung ist bei Raumtemperatur weich-elastisch.

Beispiel 18: 24,64 g (0,8 Mol) 2,2-Bis(4-hydroxy-3,5-diallylphenyl)propan entsprechend den Beispielen 6-8 werden mit 3,69 g (0,15 Mol) Diallylphthalat gemischt und auf 150°C erwärmt. In der Lösung werden 3,85 g (6 Gew.%) Polyimid I und 35,8 g Bismaleinimid entsprechend Beispiel 1 (0,1 Mol) gelöst. Die Verarbeitung und Härtung erfolgen analog Beispiel 1. Es werden die folgenden Eigenschaften gemessen:

| | |
|---|---|
| T_{g} | 330° |
| Biegefestigkeit nach ISO 178 | 160 MPa |
| Randdehnung nach ISO 178 | 4,6 %. |
| Bruchzähigkeit | 188 J/m² |

Die Mischung ist bei Raumtemperatur weich-elastisch und leicht klebrig; sie eignet sich daher sehr gut für die Herstellung von Prepregs.

Beispiel 19: Herstellung von Addukten mit o-Allylphenol-Endgruppen aus 2,2-Bis(4-allyloxyphenyl)propan und Diglycidylethern des 2,2-Bis(4-hydroxyphenyl)propans oder Bis(4-hydroxyphenyl)methans
A) In einem mit Rührer, Thermometer und Stickstoffeinlass versehenen Kolben werden 1232 g (4 Mol) 2,2-Bis(4-allyloxyphenyl)propan [Diallylether von Bisphenol A] vorgelegt. Dann werden 312,4 g eines Bis(4-hydroxyphenyl)methan-diglycidylethers mit einem Epoxidgehalt von 5,90 Aequivalenten/kg zugegeben, und das Gemisch wird bei 80°C unter Stickstoff gerührt, bis eine homogene Lösung vorliegt. Zur Bestimmung des Epoxidgehaltes wird eine kleine Probe entnommen. Es wird ein anfänglicher Epoxidgehalt von 1,17 Aequivalenten/kg gemessen. Nun gibt man 0,12 g 2-Phenylimidazol als Katalysator [100 ppm, bezogen auf das 2,2-Bis(4-allyloxyphenyl)propan] zu und erhitzt unter Rühren auf 190°C. Das Reaktionsgemisch wird 5 Stunden bei 180°C gehalten, wobei der Epoxidgehalt des gebildeten Addukts auf unter 1,0 Aequivalente/kg sinkt. Das erhaltene Addukt ist eine braune harzartige Flüssigkeit mit einer Viskosität bei 100°C von 194 MPas und einem durchschnittlichen Molekulargewicht von 650 (Zahlenmittel, bestimmt mittels Gelpermeationschromatographie).
B) Der obige Versuch wird wiederholt, jedoch unter Verwendung von 100 g 2,2-Bis(4-allyloxyphenyl)propan, 31,2 g 2,2-Bis(4-hydroxyphenyl)propan-diglycidylether mit einem Epoxidgehalt von 5,13 Aequivalenten/kg und 0,01 g 2-Phenylimidazol. Man erhält eine harzartige Flüssigkeit mit einem Epoxidgehalt unter 0,1 Aequivalenten/kg und einem durchschnittlichen Molekulargewicht von 880 (Zahlenmittel, bestimmt mittels Gelpermeationschromatographie).

Die Epoxidgehalte und die durchschnittlichen Molekulargewichte werden nach dem in J.Appl.Polym.Sci,19(1975)585-600, (H. Batzer, S.A. Zahir) publizierten Verfahren bestimmt.

### Beispiel 20

a) Entsprechend Beispiel 18 wurde eine Harzmischung hergestellt. Aus der Harzmischung wurde anschliessend ein Kohlefaser Prepreg mit einem 6 K-Rowing C-300 der Firma Toray nach dem Schmelzverfahren bereitet. Das Prepreg war bei Raumtemperatur flexibel und zeigte einen guten "Tack". Ein aus dem Prepreg hergestelltes und nach Beispiel 1 gehärtetes Laminat (unidirektionel) hatte folgende Eigenschaften:

| | |
|---|---|
| Fasergehalt | 59,5 % |
| Biegefestigkeit (2 mm Platte) parallel zur Faser | 1955 MPa |
| Biegefestigkeit quer zur Faser | 110 MPa |
| Interlaminare Scherfestigkeit | 126 MPa |
| Zugfestigkeit quer zur Faser | 55 MPa |

b) Auf die analoge Weise wie in Beispiel 20a wurde eine Laminatplatte mit der Kohlefaser T 400 von Toray hergestellt. Das Laminat hatte eine interlaminare Scherfestigkeit von 119 MPa.
c) Mit den Harzkomponenten entsprechend Beispiel 18 wurde eine 35%ige Lösung in Methylenchlorid hergestellt und ein 6 K-Rowing C-300 imprägniert. Der imprägnierte Rowing wurde im Luftstrom getrocknet und anschliessend zur Entfernung der Lösungsmittelreste kurz auf ca. 130°C erwärmt. Nach dem Abkühlen wurde er auf einen Dorn aufgewickelt. Der Rowing zeigte eine gute Flexibilität und liess sich nach dem Wickelverfahren zu einem Rohr verformen (Innendurchmesser = 40 mm).

## Patentansprüche

1. Lagerstabile heisshärtbare Mischungen, enthaltend
A) ein Polyimid, welches im Molekül mindestens zwei Reste der Formel I 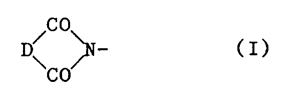 enthält, worin D einen Rest der Formeln -CR=CR'-, 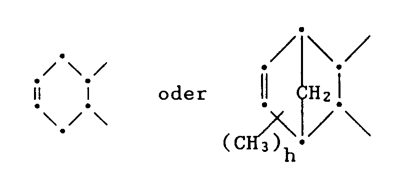 bedeutet,
worin h Null oder 1 ist und R und R' unabhängig voneinander ein Wasserstoff- oder Chloratom oder eine Methylgruppe bedeuten.
B) ein Alkenylphenol,
C) ein epoxidgruppenfreies Addukt aus einem Epoxidharz und überschüssigem Alkenylphenol und/oder
D) ein in organischen Lösungsmitteln lösliches Polyimid.

2. Mischungen nach Anspruch 1, worin das Polyimid A) eine Verbindung der Formel II 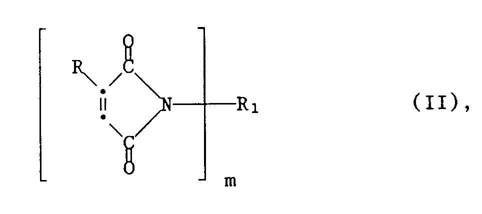 ist, worin m 2 oder 3, R ein Wasserstoffatom oder eine Methylgruppe und R₁ einen m-wertigen organischen Rest mit 2-30 C-Atomen bedeuten.

3. Mischungen nach Anspruch 2, worin m die Zahl 2, R ein Wasserstoffatom, R₁ -(CH₂)ₚ- mit p = 2-12, m- oder p-Phenylen, m- oder p-Xylylen, 1,4-Cyclohexylen, 1,4-Bis(methylen)-cyclohexylen, den Rest des 4,4'-Bicyclohexylmethans oder einen Rest der Formel IVa 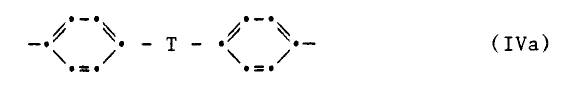 bedeuten, worin T -O-, -CH₂- oder -SO₂- darstellt.

4. Mischungen nach Anspruch 1, worin das Polyimid A) N,N',4,4'-Diphenylmethan-bismaleinimid ist.

5. Mischungen nach Anspruch 1, worin die Komponente B) eine Verbindung der Formel VI oder VIII 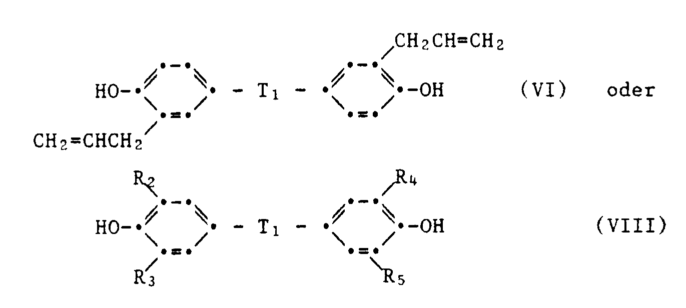 ist , worin T₁ die direkte Bindung, Methylen, 2,2-Propyliden, -O-, -S-, -SO- oder -SO₂- und R₂, R₃, R₄ und R₅ unabhängig voneinander ein Wasserstoffatom, eine Allyl- oder Propenylgruppe bedeuten, wobei mindestens eines von R₂ bis R₅ für die Propenylgruppe steht.

6. Mischungen nach Anspruch 5, worin die Komponente B) eine Verbindung der Formel VI ist, in der T₁ 2,2-Propyliden und vor allem Methylen bedeutet.

7. Mischungen nach Anspruch 1, worin sich die Addukte C) von Epoxidharzen mit durchschnittlich mehr als einer an ein S-, O- oder N-Atom gebundenen Gruppe der Formel X 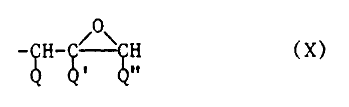 ableiten, worin Q und Q'' je ein Wasserstoffatom und Q' ein Wasserstoffatom oder eine Methylgruppe bedeuten oder Q und Q'' zusammen -CH₂CH₂- oder -CH₂CH₂CH₂- und Q' ein Wasserstoffatom bedeuten.

8. Mischungen nach Anspruch 1, worin die Komponente C) ein Addukt aus einem Ueberschuss einer Verbindung der Formel VI 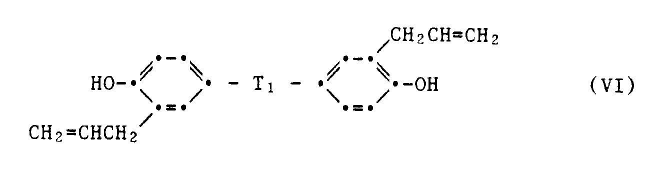 oder einem Alkenylether eines Phenols, besonders dem Diallylether des 2,2-Bis(4-hydroxyphenyl)propans, und einem gegebenenfalls vorverlängerten Diglycidylether des 2,2-Bis(4-hydroxyphenyl)propans, 2,2-Bis(3,5-dibrom-4-hydroxyphenyl)propans, Bis(4-hydroxyphenyl)methans, Bis(4-hydroxycyclohexyl)methans oder 2,2-Bis(4-hydroxycyclohexyl)propans, einem Polyglycidylether eines Novolaks oder tetraglycidyliertem 4,4'-Diaminodiphenylmethan ist.

9. Mischungen nach Anspruch 8, worin das Addukt C) ein solches aus einer Verbindung der Formel VI, worin T₁ 2,2-Propyliden und vor allem Methylen darstellt und einem gegebenenfalls vorverlängerten Diglycidylether von Bisphenol A oder Tetrabrom-Bisphenol A und besonders Bisphenol F ist.

10. Mischungen nach Anspruch 1, worin die Komponente D) ein Polyimid ist, das im wesentlichen aus wiederkehrenden Strukturelementen der Formel XI 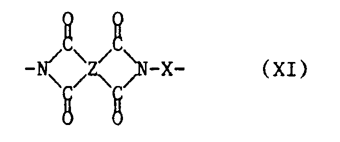 besteht, worin die vier Carbonylgruppen an verschiedene C-Atome gebunden sind und je zwei Carbonylgruppen in ortho- oder peri-Stellung zueinander stehen,
Z einen vierwertigen Rest mit mindestens einem aromatischen Ring und X einen zweiwertigen aromatischen, aliphatischen, alkylaromatischen, cycloaliphatischen oder heterocyclischen Rest oder einen Rest mit O-, S-, N-, Si- oder P-haltigen Brückengliedern darstellen, mit der Massgabe, dass
1) aus der Gesamtzahl der wiederkehrenden Polyimid-Einheiten
A) in 0 bis 100 Mol.% solcher Einheiten Z ein Phenylindanrest der Strukturformel XII 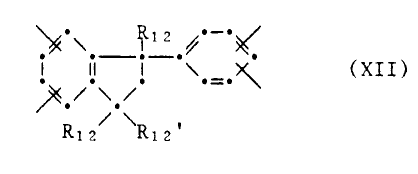 ist, worin R₁₂ Wasserstoff oder einen Alkylrest mit 1 bis 5 Kohlenstoffatomen und R₁₂' einen Alkylrest mit 1 bis 5 Kohlenstoffatomen bedeuten, und
B) in 0 bis 100 Mol.% solcher Einheiten X ein Phenylindanrest der Strukturformel XIII 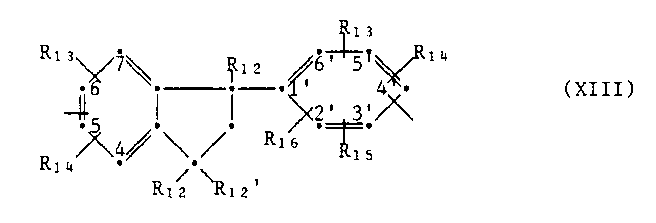 ist, worin R₁₂ Wasserstoff oder einen Alkylrest mit 1 bis 5 Kohlenstoffatomen und R₁₂' einen Alkylrest mit 1 bis 5 Kohlenstoffatomen darstellen und R₁₃, R₁₄, R₁₅ und R₁₆ unabhängig voneinander Wasserstoff, Halogen, Alkoxy oder einen Alkylrest mit 1 bis 4 Kohlenstoffatomen bedeuten und
2) aus der Gesamtzahl der Reste Z und X mindestens 10 Mol.%, bezogen auf die Einzelkomponenten, Phenylindanreste sind.

11. Mischungen nach Anspruch 10, worin Z in Formel XI ein Rest der Formel XII, der Rest des Pyromellitsäuredianhydrids, ein Rest der Formel XIV 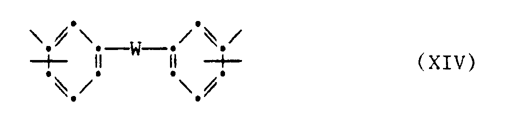 oder ein Gemisch dieser Reste ist, wobei W die direkte Bindung, -CH₂-, -O-, -SO₂- oder -CO- ist.

12. Mischungen nach Anspruch 10, worin X in Formel XI eine Gruppe der Formel XVa oder XVb 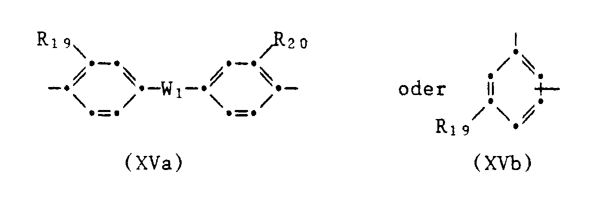 darstellt, worin W₁ eine kovalente Bindung, Methylen, Ethyliden, 2,2-Propyliden, Cyclohexyliden, -S-, -O- oder -SO₂- bedeutet und R₁₉ und R₂₀ unabhängig voneinander Wasserstoff, Halogen oder Alkyl oder Alkoxy mit je 1-5 C-Atomen, insbesondere Wasserstoff oder Methyl bedeuten.

13. Mischungen nach Ansprüchen 10 und 12, worin in den Strukturelementen der Formel XI 0 bis 100 Mol.% der Reste Z der Formel 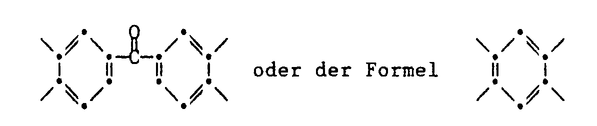 entsprechen, während 100 bis 0 Mol.% der Reste Z eine Mischung aus Resten der Formeln 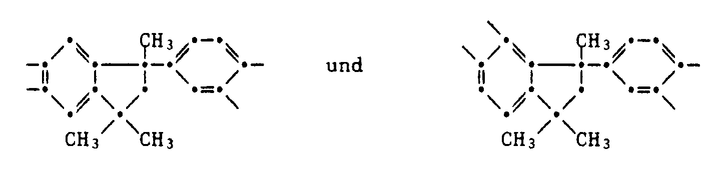 bedeuten, und 100 bis 10 Mol.% der Reste X solche der Formel XIII sind, worin R₁₂, R₁₃, R₁₄, R₁₅ und R₁₆ unabhängig voneinander Wasserstoff oder Methyl und R₁₂' Methyl bedeuten, während 0 bis 90 Mol.% der Reste X den in Anspruch 12 angegebenen Formeln XVa oder XVb entsprechen.

14. Mischungen nach Anspruch 10, worin in den Strukturelementen der Formel XI X 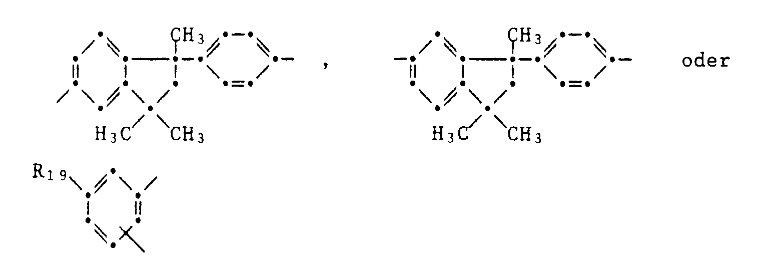 mit R₁₉ = H oder Methyl oder eine Mischung davon ist und Z 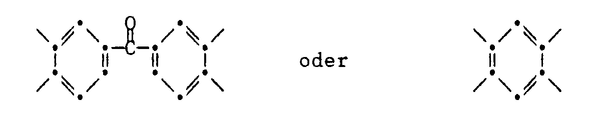 oder eine Mischung davon bedeutet, wobei der Anteil an Phenylindan-Einheiten in den Diaminkomponenten bevorzugt 70-100 Mol.% beträgt.

15. Mischungen nach Anspruch 1, worin die Komponente D) ein Homo- oder Copolyimid aus mindestens einer aromatischen Tetracarbonsäure und mindestens einem aromtischen Diamin ist, das im wesentlichen aus 5 bis 100 Mol.% mindestens eines Strukturelementes der Formel XVII 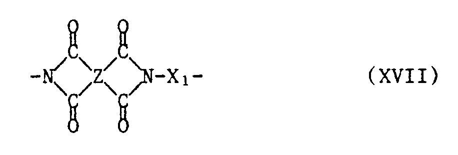 und 95-0 Mol.% mindestens eines Strukturelementes der Formel XVIII 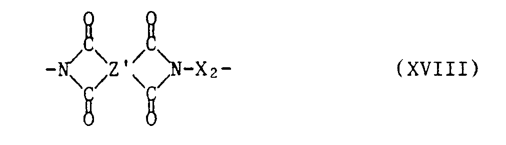 besteht, worin die vier Carbonylgruppen an verschiedne C-Atome gebunden sind und je zwei Carbonylgruppen in ortho- oder peri-Stellung zueinander stehen,
Z einen vierwertigen Rest mit mindestens einem aromatischen Ring bedeutet,
Z¹ die gleiche Bedeutung wie Z hat oder ein von Z verschiedener vierwertiger aromatischer Rest ist,
X₁ der zweiwertige Rest eines aromatischen Diamins ist, das in beiden ortho-Stellungen zu mindestens einem N-Atom durch Alkyl, Cycloalkyl, Alkoxy, Alkoxyalkyl oder Aralkyl substituiert ist oder worin zwei benachbarte C-Atome des aromatischen Restes durch Alkylen verbunden (substituiert) sind, und
X₂ einen zweiwertigen, von X₁ verschiedenen Rest eines organischen Diamins bedeutet.

16. Mischungen nach Anspruch 15, worin die Strukturelemente der Formel XVII in einer Menge von 20-100 Mol.%, besonders 50-100 Mol.%, und die Strukturelemente der Formel XVIII in einer Menge von 80 bis 0 Mol.%, besonders 50 bis 0 Mol.%, vorhanden sind.

17. Mischungen nach Anspruch 15, worin X₁ in Formel XVII einen Rest der Formeln (13), (14), (15) oder (16) 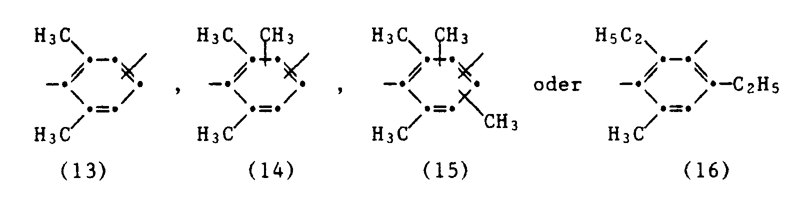 bedeutet, worin die freien Bindungen in m- oder p-Stellung zueinander stehen, oder einen Rest der Formel (17) 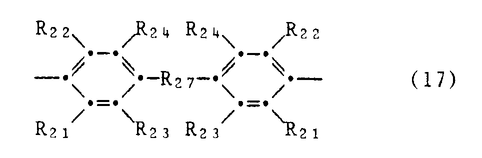 darstellt, worin R₂₁ und R₂₂ unabhängig voneinander Methyl, Ethyl, n-Propyl oder Isopropyl und R₂₃ und R₂₄ Wasserstoffatome sind oder die Bedeutung von R₂₁ haben, oder R₂₁ und R₂₃ zusammen Tri- oder Tetramethylen bedeuten und R₂₂ und R₂₄ Wasserstoffatome sind und R₂₇ eine direkte Bindung, -CH₂-, 2,2-Propyliden oder -CO- darstellt.

18. Mischungen nach Anspruch 17, worin R₂₁, R₂₂, R₂₃ und R₂₄ in Formel (17) Methyl darstellen.

19. Mischungen nach Anspruch 15, worin Z bzw. Z' den Rest des Pyromellitsäuredianhydrids, einen Rest der Formel XIV 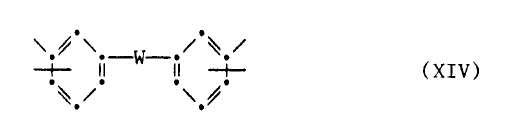 oder ein Gemisch dieser Reste darstellen, worin W die direkte Bindung, -CH₂-, -O-, -SO₂- oder -CO- ist.

20. Mischungen nach Anspruch 15, worin Z und/oder Z' den Rest des Pyromellitsäuredianhydrids oder eines Benzophenontetracarbonsäuredianhydrids oder ein Gemisch dieser Reste darstellen.

21. Mischungen nach Anspruch 1, dadurch gekennzeichnet, dass sie, bezogen auf 100 Gewichtsteile der Komponenten A) + B), 1-20, vorzugsweise 4-10 Gewichtsteile Di-n-butylphthalat, Di-n-octylphthalat, Cyanursäuretriallylester oder ein Gemisch davon enthalten.

22. Verwendung von Mischungen nach Anspruch 1 als Laminier- oder Elektroharze, als Klebstoffe oder Klebefilme für Hochtemperaturanwendungen oder zur Herstellung von Beschichtungen.

23. Verwendung von Mischungen nach Anspruch 1 zur Herstellung von kohlefaser- oder glasfaserverstärkten Verbundwerkstoffen oder zur Herstellung von Laminaten.

## Claims

1. A storage-stable heat-curable mixture containing
A) a polyimide which contains in the molecule at least two radicals of formula I 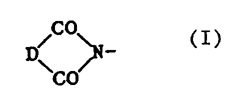 in which D is a radical of formula -CR=CR'-, 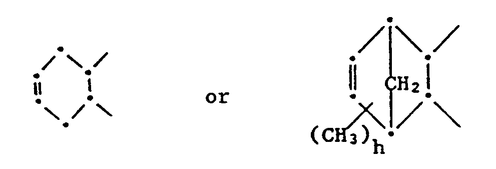 in which h is zero or 1 and R and R' are each independently of the other a hydrogen or chlorine atom or a methyl group,
B) an alkenylphenol,
C) an epoxide group-free adduct of an epoxy resin with excess alkenylphenol and/or
D) a polyimide which is soluble in organic solvents.

2. A mixture according to claim 1, in which the polyimide A) is a compound of formula II 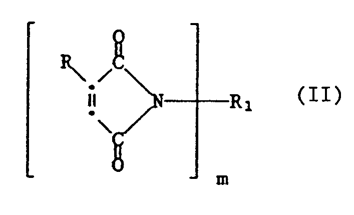 in which m is 2 or 3, R is a hydrogen atom or a methyl group and R₁ is an m-valent organic radical of 2 to 30 carbon atoms.

3. A mixture according to claim 2, in which m is the number 2, R is a hydrogen atom, R₁ is -(CH₂)ₚ-, in which p is 2 to 12, or is m-or p-phenylene, m- or p-xylylene, 1,4-cyclohexylene, 1,4-bis(methylene)cyclohexylene, the radical of 4,4'-biscyclohexylmethane or a radical of formula IVa 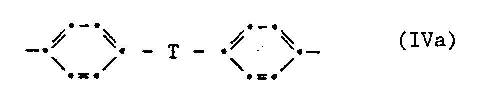 in which T is -O-, -CH₂- or -SO₂-.

4. A mixture according to claim 1, in which the polyimide A) is N,N',4,4'-diphenylmethane-bismaleimide.

5. A mixture according to claim 1, in which the component B) is a compound of formula VI or VIII 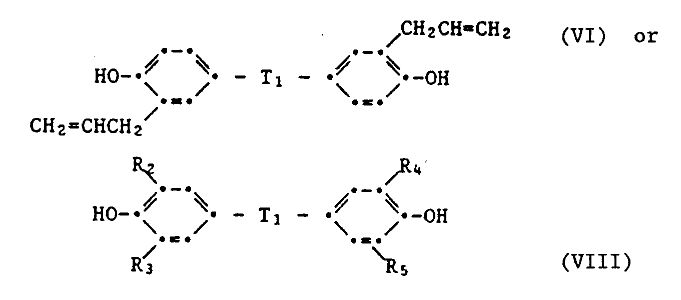 in which T₁ is the direct bond, methylene, 2,2-propylidene, -O-, -S-, -SO- or -SO₂- and R₂, R₃, R₄ and R₅ are each independently of one another a hydrogen atom, an allyl or propenyl group, with at least one of R₂ to R₅ being the propenyl group.

6. A mixture according to claim 5, in which the component B) is a compound of the formula VI in which T₁ is 2,2-propylidene or, in particular, methylene.

7. A mixture according to claim 1, in which the adduct C) is derived from an epoxy resin containing on average more than one group of formula X 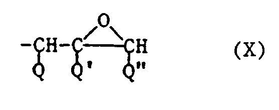 in which each of Q and Q'' is a hydrogen atom and Q' is a hydrogen atom or a methyl group or Q and Q'' together are -CH₂CH₂- or -CH₂CH₂CH₂- and Q' is a hydrogen atom, which group of formula X is attached to a sulfur, oxygen or nitrogen atom.

8. A mixture according to claim 1, in which the component C) is an adduct of an excess of a compound of formula VI 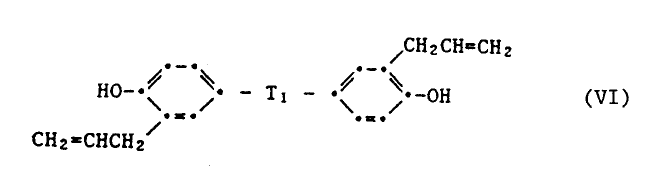 or of an alkenyl ether of a phenol, particularly the diallyl ether of 2,2-bis(4-hydroxyphenyl)propane, with a diglycidyl ether or advanced diglycidyl ether of 2,2-bis(4-hydroxyphenyl)propane, of 2,2-bis(3,5-dibromo-4-hydroxyphenyl)propane, of bis(4-hydroxyphenyl)methane, of bis(4-hydroxycyclohexyl)methane or of 2,2-bis(4-hydroxycyclohexyl)propane, or with a polyglycidyl ether of a novolak or with tetraglycidylated 4,4'-diaminodiphenylmethane.

9. A mixture according to claim 8, in which the adduct C) is an adduct of a compound of formula VI, in which T₁ is 2,2-propylidene or, in particular, methylene, with a diglycidyl ether or an advanced diglycidyl ether of bisphenol A or of tetrabromobisphenol A and, in particular, of bisphenol F.

10. A mixture according to claim 1, in which the component D) is a polyimide which essentially consists of recurring structural elements of formula XI 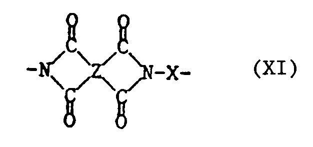 in which the four carbonyl groups are attached to different carbon atoms and each two carbonyl groups are in the ortho- or peri-position to each other,
Z is a tetravalent radical having at least one aromatic ring and
X is a divalent aromatic, aliphatic, alkylaromatic, cycloaliphatic or heterocyclic radical or a radical which contains O-, S-, N-, Si- or P-containing bridge members,
with the proviso that
1) of the total number of recurring polyimide units
A) in 0 to 100 mol% of such units, Z is a phenylindan radical of the structural formula XII 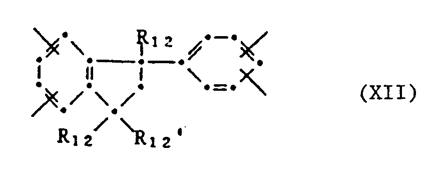 in which R₁₂ is hydrogen or an alkyl radical of 1 to 5 carbon atoms and R₁₂' is an alkyl radical of 1 to 5 carbon atoms, and
B) in 0 to 100 mol% of such units, X is a phenylindan radical of the structural formula XIII 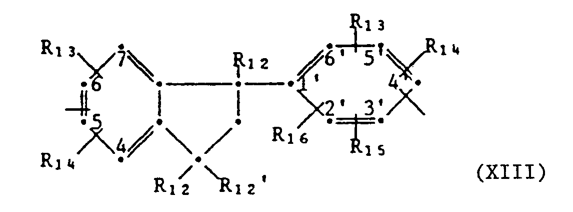 in which R₁₂ is hydrogen or an all radical of 1 to 5 carbon atoms and R₁₂' is an alkyl radical of 1 to 5 carbon atoms and R₁₃, R₁₄, R₁₅ and R₁₆ are each independently of one another hydrogen, halogen, alkoxy or an alkyl radical of 1 to 4 carbon atoms and 2) of the total number of radicals Z and X at least 10 mol%, based on the individual components, are phenylindan radicals.

11. A mixture according to claim 10, in which Z in formula XI is a radical of formula XII, the radical of pyromellitic dianhydride, a radical of formula XIV 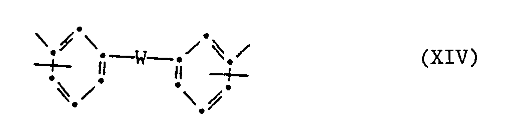 or a mixture of these radicals, W being the direct bond, -CH₂-, -O-, -SO₂- or -CO-.

12. A mixture according to claim 10, in which X in formula XI is a group of formula XVa or XVb 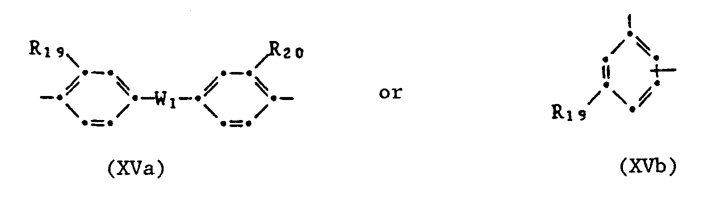 in which W₁ is a covalent bond, methylene, ethylidene, 2,2-propylidene, cyclohexylidene, -S-, -O- or -SO₂- and R₁₉ and R₂₀ are each independently of the other hydrogen, halogen, alkyl or alkoxy, each of 1 to 5 carbon atoms, especially hydrogen or methyl.

13. A mixture according to either of claims 10 or 12, in which, in the structural elements of formula XI, 0 to 100 mol% of the radicals Z are those of the formula 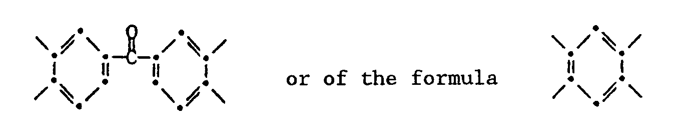 and 100 to 0 mol% of the radicals Z are a mixture of radicals of the formulae 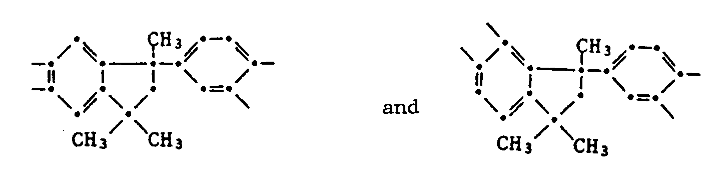 and 100 to 10 mol% of the radicals X are those of the formula XIII in which R₁₂, R₁₃, R₁₄, R₁₅ and R₁₆ are each independently of one another hydrogen or methyl and R₁₂' is methyl, and 0 to 90 mol% of the radicals X are those of the formula XVa or XVb as indicated in claim 12.

14. A mixture according to claim 10, in which, in the structural elements of formula XI, X is 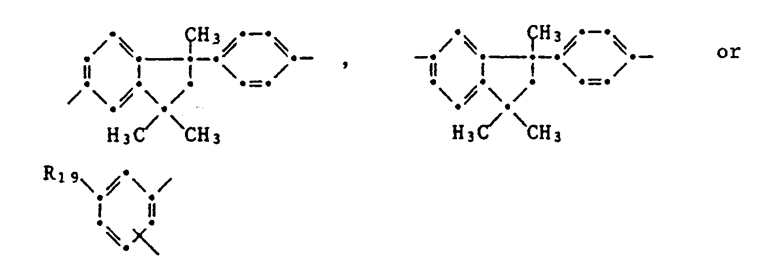 where R₁₉ is hydrogen or methyl, or a mixture thereof, and Z is 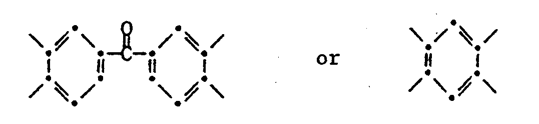 or a mixture thereof, the proportion of the phenylindan units in the diamine components preferably being 70 to 100 mol%.

15. A mixture according to claim 1, in which the component D) is a homo- or copolyimide comprising at least one aromatic tetracarboxylic acid and at least one aromatic diamine, which homo- or copolyimide essentially consists of 5 to 100 mol% of at least one structural element of formula XVII 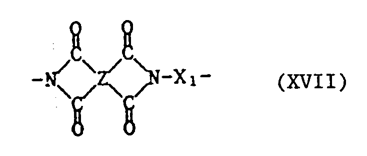 and of 95 to 0 mol% of at least one structural element of formula XVIII 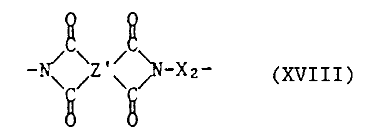 in which formulae the four carbonyl groups are linked to different carbon atoms and each pair of carbonyl groups is in the ortho- or peri-position to the other,
Z is a tetravalent radical having at least one aromatic ring,
Z' has the same meaning as Z or is a tetravalent aromatic radical different from Z,
X₁ is the divalent radical of an aromatic diamine which is substituted in both ortho-positions to at least one nitrogen atom by alkyl, cycloalkyl, alkoxy, alkoxyalkyl or aralkyl, or in which two adjacent carbon atoms of the aromatic radical are linked (substituted) by alkylene, and
X₂ is a divalent radical of an organic diamine, which radical is different from X₁.

16. A mixture according to claim 15, in which the structural elements of formula XVII are present in an amount of 20 to 100 mol%, in particular 50 to 100 mol%, and the structural elements of formula XVIII are present in an amount of 80 to 0 mol%, in particular 50 to 0 mol%.

17. A mixture according to claim 15, in which X₁ in formula XVII is a radical of formula (13), (14), (15) or (16) 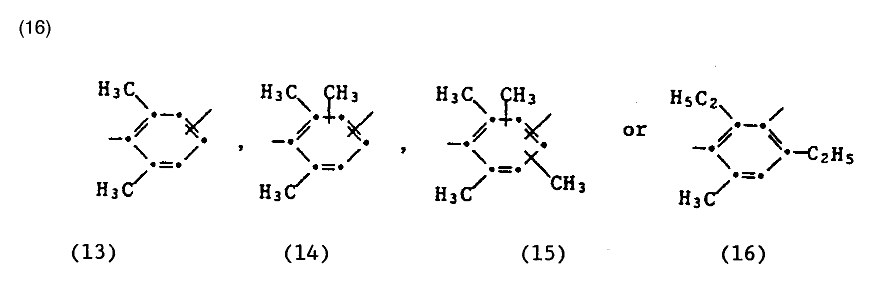 in which the free bonds are in the m- or p-position to each other, or is a radical of formula (17) 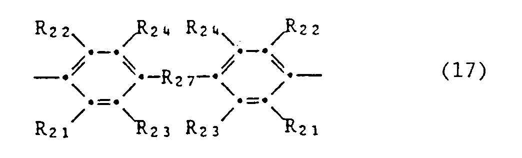 in which R₂₁ and R₂₂ are each independently of the other methyl, ethyl, n-propyl or isopropyl and R₂₃ and R₂₄ are hydrogen atoms or they have the meaning of R₂₁, or R₂₁ and R₂₃ together are trimethylene or tetramethylene and R₂₂ and R₂₄ are hydrogen atoms and R₂₇ is a direct bond, -CH₂-, 2,2-propylidene or -CO-.

18. A mixture according to claim 17, in which R₂₁, R₂₂, R₂₃ and R₂₄ in formula (17) are methyl.

19. A mixture according to claim 15, in which Z or Z' is the radical of pyromellitic dianhydride, a radical of formula XIV 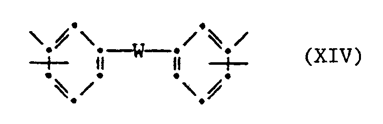 or a mixture of these radicals, in which W is the direct bond, -CH₂-, -O-, -SO₂- or -CO-.

20. A mixture according to claim 15, in which Z and/or Z' is the radical of pyromellitic dianhydride or of a benzophenonetetracarboxylic acid dianhydride or a mixture of these radicals.

21. A mixture according to claim 1, which contains, based on 100 parts by weight of components A) + B), 1 to 20, preferably 4 to 10, parts by weight of di-n-butyl phthalate, di-n-octyl phthalate, triallyl cyanurate or a mixture thereof.

22. Use of a mixture according to claim 1 as laminating resin or electro-resin, as adhesive or adhesive film for application at high temperature, or for the preparation of coatings.

23. Use of a mixture according to claim 1 for the preparation of carbon fibre- or glass fibre-reinforced composite materials or for the preparation of laminates.

## Revendications

1. Mélanges thermodurcissables, se conservant bien (stables au magasinage) contenant :
A) un polyimide, contenant dans sa molécule au moins deux restes de formule I 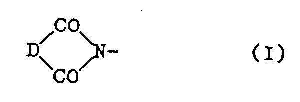 où D représente un reste répondant aux formules -CR=CR'-, 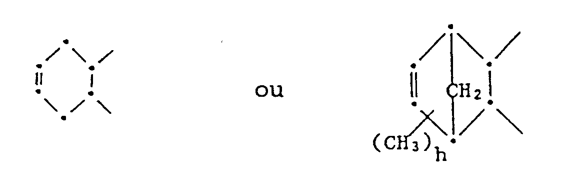 où h est nul ou vaut 1, et R et R' représentent chacun, indépendamment l'un de l'autre un atome d'hydrogène ou de chlore ou un groupe méthyle,
B) un alcénylphénol,
C) un produit d'addition, dépourvu de groupe époxyde, obtenu à partir d'une résine époxyde et d'un excès d'alcénylphénol, et/ou
D) un polyimide soluble dans les solvants organiques.

2. Mélanges selon la revendication 1, dans lesquels le polyimide (A) est un composé de formule (II) : 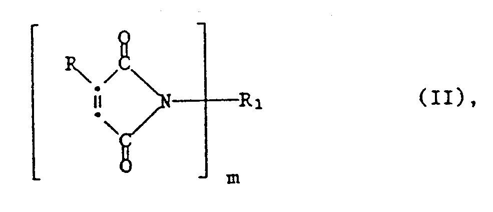 dans laquelle m vaut 2 ou 3; R représente un atome d'hydrogène ou un groupe méthyle, et R¹ représente un reste organique de valence m comportant 2 à 30 atomes de C.

3. Mélanges selon la revendication 2, dans lesquels m représente le nombre 2; R représente un atome d'hydrogène ; R¹ représente -(CH₂)ₚ- avec p valant 2 à 12, un groupe m ou -p-phénylène, m ou -p-xylylène, 1,4-cyclohexylène, 1,4-bis(méthylène)-cyclohexylène, le reste du 4,4'-bicyclohexylméthane ou un reste de formule (IVa) 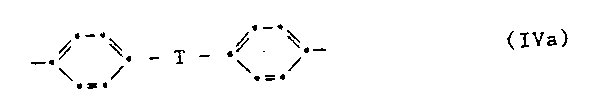 dans laquelle T représente -O-, -CH₂- ou -SO₂-.

4. Mélanges selon la revendication 1, dans lesquels le polyimide (A) est le N,N',4,4'-di-éthylméthane-bismaléinimide.

5. Mélanges selon la revendication 1, dans lesquels le composant (B) est un composé répondant à la formule (VI) ou (VIII) 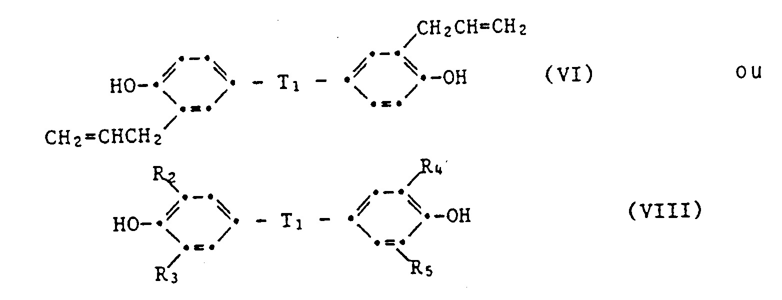 et où T₁ représente une liaison directe, un groupe méthylène, 2,2-propylidène, -O-, -S-, -SO-, ou -SO₂-et R₂, R₃, R₄ et R₅ représentent chacun , indépendamment l'un de l'autre, un atome d'hydrogène, un groupe allyle ou propényle, au moins l'un des symboles R₂ à R₅ représentant le groupe propényle.

6. Mélanges selon la revendication 5 dans lesquels le composant (B) est un composé de formule (VI), dans laquelle T1 représente un groupe 2,2-propylidène et surtout un groupe méthylène.

7. Mélanges selon la revendication 1, dans lesquels les produits d'addition (C) dérivent de résines époxydes ayant en moyenne plus d'un groupe de formule (X) 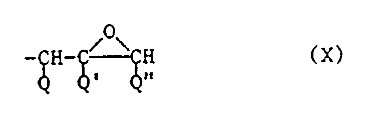 fixé sur un atome de S, de O ou de N,
les symboles Q et Q'' représentant chacun un atome d'hydrogène et Q' représentant un atome d'hydrogène ou un groupe méthyle, ou bien Q et Q'' forment ensemble -CH₂CH₂-ou CH₂CH₂CH₂- et Q' représente un atome d'hydrogène .

8. Mélanges selon la revendication 1 dans lesquels le composant (C) est un produit d'addition provenant d'un excès d'un composé de formule (VI) 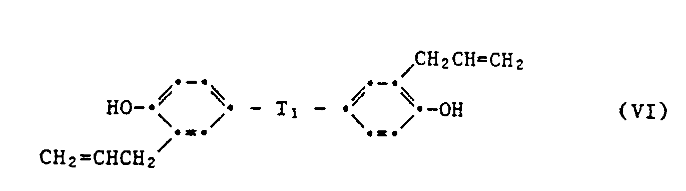 ou d'un éther alcénylique d'un phénol, notamment l'éther diallylique du 2,2-bis(4-hydroxyphényl)propane, et d'un éther diglycidylique, éventuellement préallongé, du 2,2-bis(4-hydroxyphényl)propane, du 2,2-bis(3,5-dibromo-4-hydroxyphényl)propane, du bis(4-hydroxyphényl)méthane, du bis(4-hydroxycyclohexyl)méthane ou du 2,2-bis(4-hydroxycyclohexyl)propane, d'un éther polyglycidylique d'une novolaque ou de 4,4'-diaminodiphénylméthane tétraglycidylé.

9. Mélanges selon la revendication 8, dans lesquels le produit d'addition (C) est un produit provenant d'un composé de formule (VI), dans laquelle T₁ représente un groupe 2,2-propylidène ou surtout méthylène, et d'un éther diglycidylique, éventuellement préallongé , du bisphénol A ou du tétrabromo-bisphénol A et en particulier du bisphénol F.

10. Mélanges selon la revendication 1, dans lesquels le composant (D) est un polyimide qui consiste essentiellement en des éléments structurels récurrents de formule (XI) 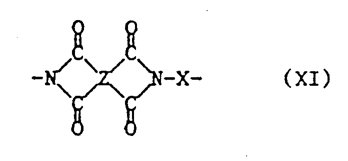 dans laquelle les quatre groupes carbonyles sont fixés sur des atomes de carbone différents et chaque ensemble de deux groupes carbonyles est en position ortho ou péri par rapport à l'autre ;
Z représente un reste tétravalent comportant au moins un noyau aromatique, et
X représente un reste divalent aromatique, aliphatique, alkylaromatique, cycloaliphatique ou hétérocyclique, ou un reste comportant des chaînons de pontage contenant O, S, N, Si ou P, à la condition que :
1) dans le nombre total des motifs polyimides récurrents
A) il y ait dans 0 à 100 moles % de tels motifs Z, un reste phénylindane de formule de structure (XII) 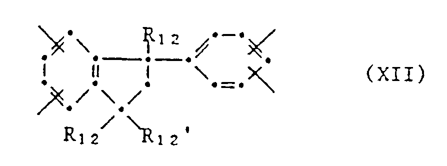 dans laquelle R₁₂ représente un atome hydrogène ou un reste alkyle ayant 1 à 5 atomes de carbone , et R_{12'} représente un reste alkyle ayant 1 à 5 atomes de carbone , et
B) dans 0 à 100 moles % de tels motifs X, il y ait un reste phénylindane de formule de structure (XIII) 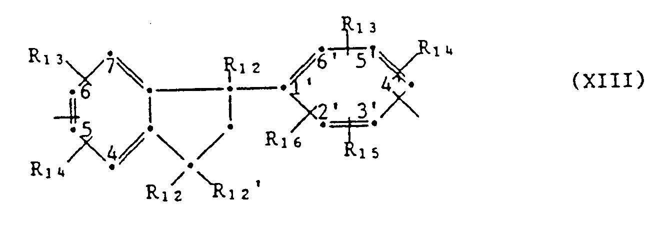 dans laquelle R₁₂ représente un atome d'hydrogène ou un reste alkyle ayant 1 à 5 atomes de carbone et R_{12'} représente un reste alkyle ayant 1 à 5 atomes de carbone, et R₁₃, R₁₄, R₁₅ et R₁₆ représentent chacun, indépendamment l'un de l'autre, un atome d'hydrogène ou d'halogène, un groupe alcoxy ou un reste alkyle ayant 1 à 4 atomes de carbone , et
2) dans le nombre total des restes Z et X, au moins 10 moles %, par rapport aux composants individuels, sont constitués par des restes phénylindanes.

11. Mélanges selon la revendication 10, dans lesquels, dans la formule (XI) Z représente un reste de formule (XII), le reste du dianhydride pyromellitique, un reste de formule (XIV) 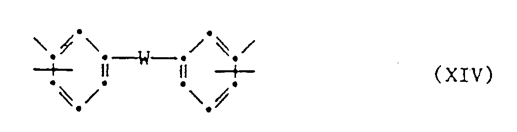 ou un mélange de ces restes, le symbole W représentant une liaison directe ou un groupe -CH₂-, -O-, -SO₂- ou CO-.

12. Mélanges selon la revendication 10, dans lesquels dans la formule (XI) X représente un groupe de formule (XVa) ou (XVb) 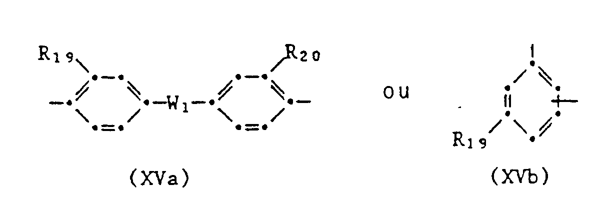 formules dans lesquelles W₁ représente une liaison de covalence, un groupe méthylène, éthylydène, 2,2-propylidène, cyclohexylidène, -S-, -O- ou -SO₂-, et R₁₉ et R₂₀ représentent chacun , indépendamment l'un de l'autre, un atome d'hydrogène ou d'halogène ou un groupe alkyle ou alcoxy ayant chacun 1 à 5 atomes de carbone, notamment un atome d'hydrogène ou un groupe méthyle.

13. Mélanges selon les revendications 10 et 12, dans lesquels, dans les éléments structurels de formule (XI) O à 100 moles % des restes Z ont pour formule 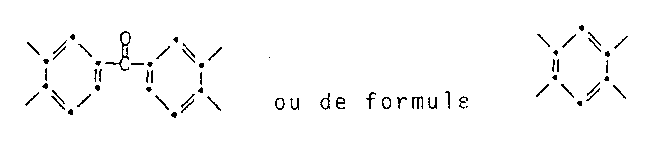 cependant que 100 à 0 mole % des restes Z constituent un mélange de restes répondant aux formules 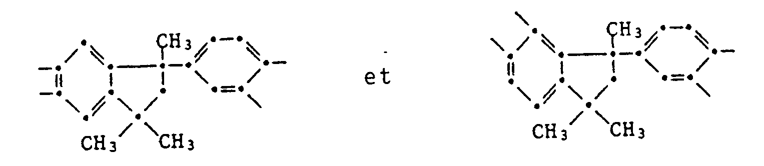 et 100 à 10 moles % des restes X sont des resteₛ de formule (XIII), où R12, R13, R14, R15 et R¹⁶, représentent chacun indépendamment l'un de l'autre, un atome d'hydrogène ou un groupe méthyle et R_{12'} représente un groupe méthyle, cependant que 0 à 90 moles % des restes X répondent aux formules (XVA) ou (XVb) indiquées à la revendication 12.

14. Mélanges selon la revendication 10, dans lesquels, dans les éléments de structure de formule (XI), le symbole représente 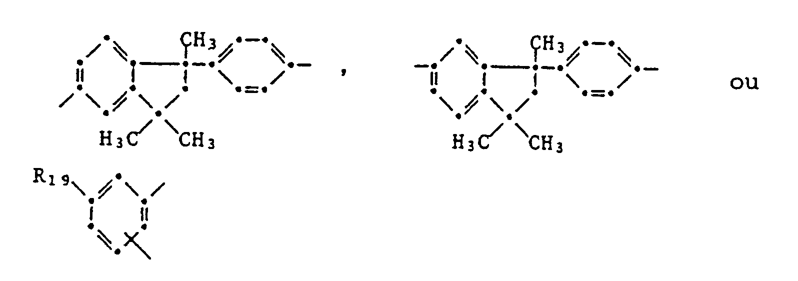 avec R₁₉ représentant un atome d'hydrogène ou un groupe méthyle, ou un mélange de ces restes, et Z représente 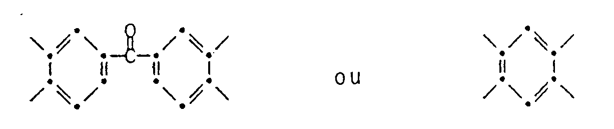 ou un mélange de ces restes, la proportion des motifs phénylindane étant de préférence de 70 à 100 moles % dans le composant diamine.

15. Mélanges selon la revendication 1, dans lesquels le composant (D) est un homopolyimide ou un copolyimide provenant d'au moins un acide tétracarboxylique aromatique et d'au moins une diamine aromatique, consistant essentiellement en 5 à 100 moles % d'au moins un élément de structure de formule (XVII) 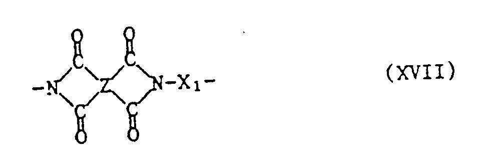 et en 95 à 0 mole % d'au moins un élément de structure de formule (XVIII), 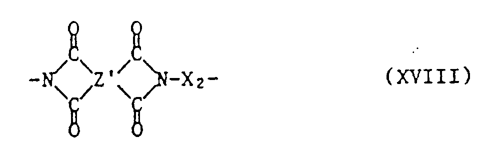 où les quatre groupes carbonyles sont fixés sur des atomes de C différents et chaque ensemble de deux groupes carbonyles est en position ortho ou péri par rapport à l'autre ensemble,
Z représente un reste tétravalent comportant au moins un noyau aromatique,
Z' a le même sens que Z ou représente un reste aromatique tétravalent différent de Z,
X₁ représente le reste divalent d'une diamine aromatique, qui porte, sur les deux positions ortho par rapport à au moins un atome d'azote, comme substituants des groupes alkyles, cycloalkyles, alcoxy, alcoxyalkyles ou aralkyles, ou bien deux atomes de C voisins du reste aromatique sont reliés par un groupe alkylène (ou portent comme substituant un groupe alkylène), et
X₂ représente un reste divalent, différent de X₁, d'une diamine organique.

16. Mélanges selon la revendication 15, dans lesquels les éléments structurels de formule (XVII) sont présents en une proportion de 20 à 100 moles %, notamment 50 à 100 moles %, et les éléments structurels de formule (XVIII) sont présents en une quantité de 80 à 0 moles %, notamment 50 à 0 moles %.

17. Mélanges selon la revendication 15, dans lesquels, dans la formule (XVII), X1 représente un reste répondant aux formules (13), (14), (15), ou (16) 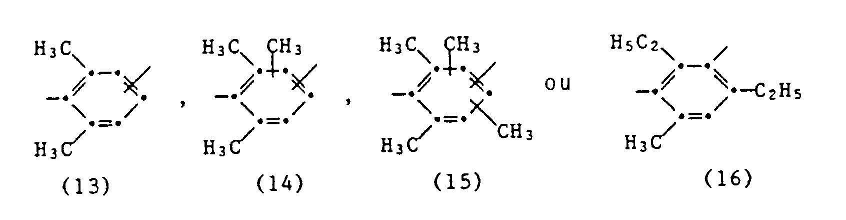 dans lesquelles les liaisons libres sont en position méta ou para l'une par rapport à l'autre, ou un reste de formule (17) 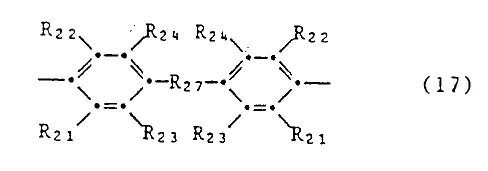 formule dans laquelle R₂₁ et R₂₂ représentent chacun, indépendamment l'un de l'autre, un groupe méthyle, éthyle, propyle, ou isopropyle, et R₂₃ et R₂₄ représentent des atomes d'hydrogène ou ont le sens de R₂₁, ou bien R₂₁ et R₂₂ forment ensemble un groupe triméthylène ou tétraméthylène et R₂₂ et R₂₄ représentent des atomes d'hydrogène, et R₂₇ représente une liaison directe, un groupe -CH₂-, 2,2-propylydène ou -CO-.

18. Mélanges selon la revendication 17, dans lesquels les symboles R₂₁, R₂₂, R₂₃ et R₂₄ représentent dans la formule (17) chacun un groupe méthyle.

19. Mélanges selon la revendication 15, dans lesquels Z ou Z' représentent le reste d'un dianhydride d'acide pyromellitique, un reste de formule (XIV) 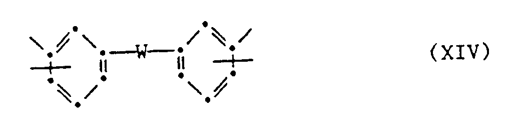 ou un mélange de ces restes, le symbole w représentant une liaison directe ou -CH₂-, -O-, -SO₂- ou - CO-.

20. Mélanges selon la revendication 15, dans lesquels Z et/ou Z' représente(nt) le reste du dianhydride de l'acide pyromellitique ou d'un dianhydride d'acide benzophénone tétracarboxylique ou un mélange de ces restes.

21. Mélanges selon la revendication 1, caractérisés en ce que, pour 100 parties en poids des composants (A) plus (B), ils contiennent 1 à 20 avantageusement 4 à 10 parties en poids de phtalate de di-butyle, de phtalate de di-octyle, de cyanurate de triallyle ou d'un mélange de ces composes.

22. Utilisation de mélanges selon la revendication 1 comme résine pour stratification pour production d'éléments ou d'équipements électriques, comme adhésifs ou colles ou pellicules de colle, pour des applications à des températures élevées ou pour produire des revêtements.

23. Utilisation de mélanges selon la revendication 1 pour produire des matériaux composites, renforcés par des armatures de fibres de carbone ou de fibres de verre, ou pour produire des stratifiés.
